# EUROPEAN PATENT SPECIFICATION

(11) **EP 4 052 574 B1**
(45) Date of publication and mention of the grant of the patent: **03.06.2026**
(21) Application number: 20930070.6
(22) Date of filing: 20.10.2020
(51) Int. Cl.: A01N 25/04, A01N 25/30, A01N 37/40, A01N 37/48, A01N 39/04, A01N 41/06, A01P 13/00

(54) **PHYTOSANITARY HERBICIDE COMPOSITION IN THE FORM OF A MICROEMULSION WITH LOW SURFACTANT CONTENT AND HIGH COMPATIBILITY IN ULTRA-LOW VOLUME SPRAY LIQUIDS, AND METHOD FOR OBTAINING IT**
PHYTOSANITÄRE HERBIZIDZUSAMMENSETZUNG IN FORM EINER MIKROEMULSION MIT NIEDRIGEM TENSIDGEHALT UND HOHER VERTRÄGLICHKEIT IN SPRAYFLÜSSIGKEITEN MIT ULTRANIEDRIGEM VOLUMEN UND VERFAHREN ZU DEREN HERSTELLUNG
COMPOSITION PHYTOSANITAIRE D'HERBICIDES SOUS FORME DE MICRO-ÉMULSION À FAIBLE TENEUR EN TENSIOACTIFS, À COMPATIBILITÉ ÉLEVÉE EN BOUILLONS D'ASPERSION D'ULTRA FAIBLE VOLUME, ET PROCÉDÉ D'OBTENTION DE CELLE-CI

(30) Priority: 08.04.2020 AR P200101010
(43) Date of publication of application: 07.09.2022
(73) Proprietor: Red Surcos Colombia S.A.S., Barrio El Lago Bogotá (CO)
(72) Inventor: GALÁN ROMANO, Félix Silvestre, Ciudad Autónoma de Buenos Aires, 1073 (AR)
(74) Representative: López Camba, Emilia
(86) International application number: PCT/IB2020/059866
(87) International publication number: WO 2021/205222

(56) References cited:
- WO-A1-2019/215483
- CA-A1- 3 095 990
- CN-A- 102 726 414
- CN-A- 106 342 813
- GB-A- 2 267 825

## Description

### STATE OF THE ART OF THE INVENTION

The present invention relates to the field of products and active ingredients for application in pest control, preferably for application in agriculture, and more specifically relates to herbicide formulations in microemulsion (ME) form, which include an active ingredient selected from 2,4-dichlorophenoxyacetic acid (2,4-D), 3,6-dichloro-2-methoxybenzoic acid (Dicamba), 5-(2-chloro-α,α,α-trifluoro-p-tolyloxy)-N-methylsulfonyl-2-nitrobenzamide (Fomesafen) and Ethyl O-[5-(2-chloro-α,α,α-trifluoro-p-tolyloxy)-2-nitrobenzoyl]-DL-lactate (Lactofen). The active ingredient is found in its dissolved form in a solvent that acts as a compatibilizing agent, which implies a series of agronomic advantages that will be developed in the present application. Indeed, the excessive use of surfactants of the compositions of the prior art is hereby overcome by advantageously using, with the formulation of the application, the solvent that will be described in detail below, which in turn fulfills the function of acting as a compatibilizing agent, thus improving the performance of the active ingredient in the formulations of the invention or in solutions obtained therefrom.

### Description of prior art

Herbicide resistance is defined as the inherited ability of a weed to survive a dose of herbicide that would normally provide effective control. In the Argentine Republic there are 36 biotypes and 20 species of weeds resistant to herbicides such as glyphosate; selective postemergence graminicides; imidazolinones, sulfonylureas and triazolopyrimidines and hormonal ones. The practice of mixing one or more herbicides in the spray solution is a common practice and has many advantages when compared to the way each product is used separately, generating an increase in the spectrum of action and a reduction in the probability generation of new resistances.

However, mixing the products may cause undesirable effects due to physical and/or chemical incompatibilities.

Physical incompatibility is caused by the formulation of the products and their interactions, which results in the formation of precipitates, phase separation, formation of solid macro-particles or clogging of spray tablets, among others.

This leads to the total loss of activity or reduction of the activity of the active ingredients, under-dosing or over-dosing of the application dose, the non-possibility of application, or the application with a higher cost.

Among these incompatibilities, the best known are those belonging to herbicide glyphosate and hormonal products such as 2,4-D and dicamba, fomesafen and lactofen, or others from the triazine group, such as atrazine. These mixtures are widely used in production since the herbicide glyphosate is the most widely used worldwide, so the generation of resistance was high, having to be mixed with other products to guarantee weed control.

Searching for new alternatives to improve control, the use of pre-emergence herbicides was significantly increased. Due to this, the tank mixes changed from two products in most cases to three or more products, producing an increase in the concentration of formulated products, thus worsening the stability conditions.

Another important aspect to take into account regarding physical incompatibilities is the volume of water used to make the tank mix. As the volume increases, compatibility improves, for example if volumes of 80 I/ha are increased, which is a maximum volume used in the field for herbicides, incompatibilities are reduced in most cases, but if said volume is reduced, the mixture is more incompatible because it has a greater interaction with each other. The use of smaller volumes of water in the solution is motivated by multiple factors: shortage of resource, access difficulty and economy of application or application technique where aerial application uses low volumes, for example in extreme cases 10 I/ha (liters per hectare).

Examples provided below in this application are only a small part of the mixtures used in the field, wherein most of the time the conditions of the mixtures worsen, causing greater instability.

Compositions of 2,4-D and Dicamba in acid form formulated in the form of a microemulsion are known. Among the closest documents known to the inventors, the patent documents US 6803345 B2, US 7094735 B2 and the published applications US 2011/0281731 and US 2014/0005052 A1 are especially mentioned.

Patent US 6803345 B2 refers to a microemulsion-forming concentrate that includes, among many other active ingredients, 2,4-D and Dicamba in acid form. Said patent discloses as an essential part the absence of organic solvent and water in the concentrate. It also refers to the fact that the concentrate includes the active ingredient and a surfactant in high proportions.

Patent US 7094735 B2 refers to a microemulsion that, among several active ingredients, includes 2,4-D and Dicamba in acid form. The microemulsion disclosed in said document necessarily includes an acidifying agent, since said component is necessary to bring the pH up to the pKa of the active ingredient used.

Both documents cited above are mainly based on the use of the surfactant (emulsifier) as a solvent.

Publication of application US 2011/0281731 describes an emulsifiable concentrate comprising a herbicide, a solvent, a mixture of emulsifiers, a co-solvent and water. The document also describes that organic solvents also fulfill a second antifreeze and antigelling function. Said document describes an emulsifiable concentrate that could be defined as typical.

Patent Application US 2014/0005052 A1 describes a microemulsion comprising a herbicide in its acid form, a polar co-solvent, at least one nonionic surfactant, at least one anionic surfactant and water. The document also describes the function of anionic and non-ionic surfactants as solvents. This application is technologically of the type of the formulations of documents US 6803345 B2 and US 7094735 B2, with the difference that it is a Microemulsion (ME), instead of a Microemulsion Forming Concentrate (CFM), in which a high quantity of surfactants is used.

CA 3095990 A1 discloses microemulsions of 2,4-D and dicamba. The micoemulsions of CA 3095990 A1 comprise a soybean oil amino amide. However, this document does not specify whether the amino amide in the soybean oil amino amide can be a dimethylamino propalamide group. Furthermore, the micoemulsions of CA 3095990 A1 do not comprise ethanol.

CN 102 726 414 A discloses Fomesafen microemulsions. The microemulsions of CN 102 726 414 A do not comprise dimethylamino propalamide of saturated and unsaturated fatty acids (DPAG) and coconut fatty amine ethoxylate.

CN 106 342 813 A discloses microemulsions of Lactofen. The microemulsion of CN 106 342 813 A do not comprise DPAG and coconut fatty amine ethoxylate.

This application differs basically from the previous ones in that it provides a novel formulation, both in its components and in its percentage, which allows, among other things, to replace the excessive use of surfactants with a better quality solvent, which in turn fulfills the function of acting as a compatibilizing agent, improving the performance of the product in the solution. In the previous patents and applications, a leading role is given to the surfactant, or a mixture thereof, where in general 4 to 6 times the amount required in the present application is used.

While the pH in the prior art is an important factor, for example between 1.9 and 3.4 depending on the active ingredient, this fact represents an unnecessary risk for operators, applicators and all agents involved in the chain, from production to the application in the field.

On the other hand, although surfactants are low toxicity products, they should be handled with the same precautions as any herbicide. Their use in high concentrations can cause damage to crops, in addition to the fact that when they are used in high concentrations, they add an extra cost that is desirable to avoid.

### BRIEF DESCRIPTION OF THE INVENTION

It is therefore an object of the present invention to provide a new composition of a formulated phytosanitary product that allows ultra-low volume applications while being 100% compatible with other formulations on the market. Said invention is formed as a microemulsion with an active ingredient selected from 2,4-D, dicamba, fomesafen or lactofen.

It is also an object of the present invention to provide a phytosanitary herbicide composition in the form of a microemulsion wherein the active ingredient, for example 2,4-D, Dicamba, Fomesafen or Lactofen, does not need to be modified to achieve greater solubility in the formula.

It is also an object of the present invention to provide a herbicide phytosanitary composition in the form of a microemulsion in which a greater bioavailability and bio-efficacy of the active ingredient is provided, because the physical and chemical losses in the formation of the solution are minimized, during and after spraying.

It is also an object of the present invention to provide a herbicide phytosanitary composition in the form of a microemulsion in which there is physical-chemical compatibility in tank mixes with other formulations due to the engineered compatibilizing solvent of the invention.

It is still an object of the present invention to provide a herbicide phytosanitary composition in the form of a microemulsion that has a novel solvent acting in the formula at the same time as a compatibilizing agent.

**It** is also an object of the present invention to provide a herbicide phytosanitary composition in the form of a microemulsion that generates a much lower environmental impact due to a lower dose/use per hectare of the active ingredient, thus generating less residue in crops.

**It** is also an object of the present invention to provide a herbicide phytosanitary composition in the form of a microemulsion that allows reducing application costs by reducing the volume of solution necessary to apply per hectare.

**It** is also an object of the present invention to provide a herbicide phytosanitary composition in the form of a microemulsion that uses a solvent, which also functions as a compatibilizing agent, at the expense of an overload of surfactants, thus achieving a reduction of 50-70%, described in documents of the prior art, at a minimum value of 7-12% in the present application.

**It** is also an object of the present invention to provide compositions of herbicides 2,4-D, Dicamba, Fomesafen or Lactofen, which when their components, such as surfactant and solvent, are combined in the appropriate amounts, give the formulation the desired properties.

**It** is also an object of the present invention to provide a herbicide phytosanitary composition in the form of a microemulsion which, by comprising the use of the solvent/compatibilizing agent combined with the surfactant in the defined amounts, achieves a formulation whose improved properties allow obtaining a composition that shows the features previously described.

**It** is still an object of the present invention to provide a composition in microemulsion (ME) form that is highly compatible in spray solutions, even in Ultra Low Volume applications, wherein the composition comprises:

| | |
|---|---|
| Dimethylamino propalamide of saturated and unsaturated fatty acids | 35- 45% w/v; |
| Coconut Fatty Amine Ethoxylate | 7- 12% w/v; |
| Ethanol | 6- 9% w/v; |
| Water | 20- 30% w/v; |
| Active ingredient | 10- 40% w/v; |

said active ingredient being selected from 2,4-D, Dicamba, Fomesafen y Lactofen.

It is also an object of the present invention to provide a method for preparing the composition of the invention, wherein the method comprises the steps of:
- loading the theoretical amount of the coconut fatty amine ethoxylate with 15 moles of ethylene oxide in the stirring tank,
- adding under stirring all the desired ethanol, until homogeneity is reached,
- adding under stirring half of the desired water, until homogeneity is achieved,
- loading under stirring the total desired amount of dimethylamino propalamide of saturated and unsaturated fatty acids, and stirring until complete dissolution is achieved and a crystalline solution is obtained,
- loading under stirring the total desired amount of an active ingredient selected from 2,4-D, Dicamba, Fomesafen or Lactofen, and stirring until complete dissolution is achieved and a crystalline solution is obtained,
- adding under stirring the rest of the desired water in the formula, until reaching homogeneity and final volume, and
- filtering the solution being thus homogenized.

It is also an object of the present invention to provide a tank mix that includes any of the compositions of the invention wherein, as a complementary agrochemical component, glyphosate, picloram, atrazine, sulfentrazone, cloransulam, mepiquat, paraquat, imazapyr, imazapic, imazetapyr, or mixtures thereof, are used.

### DETAILED DESCRIPTION OF THE INVENTION

Now referring in detail to the composition of the invention, it can be noted that said invention provides a new phytosanitary composition formulated as a microemulsion, which is stable due to the development of a engineered solvent/compatibilizing agent that maintains the active ingredient, such as 2,4-D, Dicamba, Fomesafen or Lactofen, completely solubilized and protected, and which in turn gives it the particular features that are the object of the invention mentioned above.

More specifically, the composition of the present invention comprises:
35-45% dimethylamino propalamide of saturated and unsaturated fatty acids (DPAG) as solvent/compatibilizing agent,
7-12% Coconut Fatty Amine Ethoxylate as surfactant,
6-9% ethanol as diluent,
20-30% water as carrier, and
10-30% of an active ingredient selected from 2,4-D, Dicamba, Fomesafen and Lactofen.

The aforementioned percentages are expressed in % w/v, with respect to the total formulation.

The general and physical-chemical features of each of the components used in the formulation of the present invention are detailed below.

The compound used as a solvent, which constitutes an essential component in the formulation of the invention, is a dimethylamino propalamide of saturated and unsaturated fatty acids, which corresponds to the following formula: 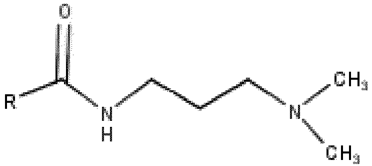 wherein R is a saturated and/or unsaturated fatty acid selected from the group consisting of caproic acid, capric acid, myristic acid, palmitoleic acid, stearic acid, linoleic acid, caprylic acid, lauric acid, palmitic acid, arachidic acid, oleic acid.

Preferably, the fatty acids are obtained from at least soybean oil, coconut oil, sunflower oil, cottonseed oil, or a combination thereof.

The soybean oil-based solvent preferably has a pH between 10.8 and 11.8, a density at 20°C between 0.895-0.905g/cm3, and a refractive index at 20°C between 1.468-1.472.

The oil can also be coconut oil, with the solvent having a pH between 10.4 and 11.7, a density at 20°C between 0.87-0.89g/cm3, and a refractive index at 20°C between 1.439-1.445.

Said solvent can also be constituted by a mixture of 30% soybean oil and 70% coconut oil, which has a pH between 10.5 and 11.4, a density at 20°C between 0.87-0.89g/cm3, and a refractive index at 20°C between 1.439-1.445.
1) dimethylamino propalamide of saturated and unsaturated fatty acids:
   Physical state: liquid above 20°C, below this temperature it is an amber-colored waxy solid,
   Odour: characteristic of amines,
   Color: amber to dark caramel,
   pH value 11.7-12.9 at 20°C,
   Melting point: 20°C,
   Flammability: non-flammable,
   Density: 0.90g/cm3 (20°C),
   Solubility in water: emulsifies,
   Free amines < 4 meq/g,
   Refractive index = 1.472,
2) Coconut fatty amine ethoxylate, 15 mol EO:
   Physical state: liquid above 25°C,
   pH: alkaline,
   Amine value: 55-75,
   HLB: 15.43,
   Maximum humidity <1%,
3) Ethanol:
   Appearance: Clear, colorless liquid
   Odour: Characteristic,
   Boiling point: 78.5°C,
   Melting point: -114.1°C,
   Flash point: 13°C,
   Auto ignition temperature: 425°C,
   Vapor pressure: (20°C) 59 mbar,
   Density (20/4): 0.804,
   Solubility: Miscible with water.

The active ingredient used in the formulation of the invention, which is selected from 2,4-D, Dicamba, Fomesafen and Lactofen, is used without modifying its chemical structure, since it is completely soluble in the engineered solvent/compatibilizing agent, even in its acid form, and in turn the formula obtained is soluble in water. It is for this reason that it is not necessary to salify it to subsequently make it soluble in water, nor to esterify it by reacting it with alcohols, in order to later incorporate the new molecule thus modified into conventional emulsions.

Due to the fact that the active ingredient is completely solubilized in the solvent of the invention, it does not have appreciable exchanges with the cations present in hard water, nor does it generate competition with the cations of the salts of the other agrochemicals added to the solution in tank mix. This quality makes it highly compatible with other agrochemicals and water, avoiding the waste of agrochemicals in the solution due to their precipitation by generating new insoluble salts, and also preventing these salts from plugging the spray nozzles. All of the above means an improvement in the overall performance of the application solution. This property is particularly desirable and effective in Ultra Low Volume (ULV) applications in which, due to scarce water resources, making aerial applications or simply optimizing the application, low volumes of water are used in the solution. Active ingredients that can be used in tank mixes with the formulations of the present invention include glyphosate, picloram, atrazine, sulfentrazone, chloransulam, mepiquat, paraquat, imazapyr, imazapic, imazetapyr, or mixtures thereof. Notwithstanding the foregoing, the preferred use of glyphosate will be illustrated hereinafter.

The particular combination of the solvent/compatibilizing agent and the surfactant achieve a stable microemulsion that allows greater agronomic efficiency, since it remains as such even in very demanding dilutions, reaching micelles smaller than 50 nanometers. In turn, this mixture minimizes physical-chemical losses such as photolysis, hydrolysis, drift, rebound, rolling, fragmentation or adherence.

In addition to the above features, the composition has greater penetration, which is inherent because it is in the form of a microemulsion. The fact that the active ingredient is found in acid form, which means greater biological activity than salts and esters, and that it contains an engineered solvent that acts as a compatibilizing agent, allowing the loss of active ingredient to be reduced, results in a significant decrease in the active substance required for weed control compared to prior art products.

To demonstrate the advantages described above, the following tests were carried out using the formulation object of the invention, comparing them with conventional commercial products, which are commonly used on the market. The results achieved demonstrate that the formulation proposed in the present invention is beneficial, since the proposed objectives are actually achieved.

The preferred formulation according to the invention is detailed below, wherein the active ingredient 2,4-D is microemulsified in its acid form:
30% w/v of 2,4-D in acid form,
37% w/v of dimethylamino propalamide of saturated and unsaturated fatty acids,
7% w/v of Ethanol,
11.0% w/v of Coconut Fatty Amine Ethoxylate with 15 moles of ethylene oxide, and
22.0 % w/v of water.

The preferred formulation according to the invention is detailed below, wherein the active ingredient Dicamba is microemulsified in its acid form:
20% w/v of Dicamba in acid form,
42% w/v of dimethylamino propalamide of saturated and unsaturated fatty acids,
8% w/v of Ethanol,
8% w/v of Coconut Fatty Amine Ethoxylate with 15 moles of ethylene oxide, and
28% w/v of water.

The preferred formulation according to the invention is detailed below, wherein the active ingredient Fomesafen is microemulsified in its acid form:
12.5% w/v of Fomesafen in acid form,
45.0% w/v of dimethylamino propalamide of saturated and unsaturated fatty acids,
8.0% w/v of Ethanol,
9.0% w/v of Coconut Fatty Amine Ethoxylate with 15 moles of ethylene oxide, and
28.0 % w/v of water.

Finally, the preferred formulation according to the invention is detailed below, wherein the active ingredient Lactofen is microemulsified in its acid form:
15% w/v of Lactofen in acid form,
43% w/v of dimethylamino propalamide of saturated and unsaturated fatty acids,
7% w/v of Ethanol,
8% w/v of Coconut Fatty Amine Ethoxylate with 15 moles of ethylene oxide, and
28% w/v of water.

### Example 1

### Obtaining the preferred formulations

**1. General characterization of the process:** The formulation process was carried out under the Batch modalities (batch of 10000 L).
   - 1100 kg of the Coconut Fatty Amine Ethoxylate with 15 moles of ethylene oxide were loaded to the stirring tank.
   - Under stirring, 700 kg of ethanol indicated in the formula was added, until reaching homogeneity.
   - Under stirring, 1100 kg of water was added until reaching homogeneity.
   - Under stirring, 3700 kg of dimethylamino propalamide of saturated and unsaturated fatty acids were loaded, and stirred until complete dissolution and obtaining a crystalline solution.
   - Under stirring, 3000 kg of the active ingredient 2,4-D were loaded, and stirred until complete dissolution and obtaining a crystalline solution.
   - Under stirring, 1100 kg of water was added until reaching homogeneity and final volume.
   - Filtration and quality control of the product were carried out, which, once approved, was released for packaging.
**2. Description of equipment being used:**
   The following pieces of equipment built with stainless steel were used:
   Mixing tank,
   Centrifugal pump,
   Finished product storage tank,
   Packaging machines.
**3. Description of the conditions that were controlled during the process:**
   - Dissolution temperature of the active ingredient, which did not exceed 45 °C,
   - Final density of the mixture, which remained within the parameters 1.050 - 1.100 g/ml at 20°C,
   - The final pH of the mixture was kept within the parameter of 5.4 - 5.9,
   - The final color of the mixture is crystalline amber.

### Example 2

### Obtaining the preferred formulations

**1. General characterization of the process:** The formulation process was carried out under the Batch modalities (batch of 10000 L).
   - 800 kg of Coconut Fatty Amine Ethoxylate with 15 moles of ethylene oxide were charged to the stirring tank.
   - Under stirring, 800 kg of ethanol indicated in the formula was added, until reaching homogeneity.
   - Under stirring, 1400 kg of water was added until reaching homogeneity.
   - Under stirring, 4200 kg of dimethylamino propalamide of saturated and unsaturated fatty acids were loaded, and stirred until complete dissolution and obtaining a crystalline solution.
   - Under stirring, 2000 kg of the active ingredient Dicamba were loaded, and stirred until complete dissolution and obtaining a crystalline solution.
   - Under stirring, 1400 kg of water was added until reaching homogeneity and final volume.
   - Filtration and quality control of the product were carried out, which, once approved, was released for packaging.
**2. Description of equipment being used:**
   The following pieces of equipment built with stainless steel were used:
   Mixing tank,
   Centrifugal pump,
   Finished product storage tank,
   Packaging machines.
3. **Description of the conditions that were controlled during the process:**
   - Dissolution temperature of the active ingredient, which did not exceed 45 °C,
   - Final density of the mixture, which remained within the parameters 1.060 - 1.080 g/ml at 20°C,
   - The final pH of the mixture was kept within the parameter of 4.6 - 5.0,
   - The final color of the mixture is crystalline amber.

### Example 3

### Obtaining the preferred formulations

**1. General characterization of the process:** The formulation process was carried out under the Batch modalities (batch of 10000 L).
   - 900 kg of Coconut Fatty Amine Ethoxylate with 15 moles of ethylene oxide were loaded into the sitting tank.
   - Under stirring, 800 kg of ethanol indicated in the formula was added, until reaching homogeneity.
   - Under stirring, 1400 kg of water was added until reaching homogeneity.
   - Under stirring, 4500 kg of dimethylamino propalamide of saturated and unsaturated fatty acids were loaded, and stirred until complete dissolution and obtaining a crystalline solution.
   - Under stirring, 1250 kg of the active ingredient Fomesafen were loaded, and stirred until complete dissolution and obtaining a crystalline solution.
   - Under stirring, 1400 kg of water was added until reaching homogeneity and final volume.
   - Filtration and quality control of the product were carried out, which, once approved, was released for packaging.
**2. Description of equipment being used:**
   The following pieces of equipment built with stainless steel were used:
   Mixing tank,
   Centrifugal pump,
   Finished product storage tank,
   Packaging machine.
**3. Description of the conditions that were controlled during the process:**
   - Dissolution temperature of the active ingredient, which did not exceed 45 °C,
   - Final density of the mixture, which remained within the parameters 1.035 - 1.044 g/ml at 20°C,
   - The final pH of the mixture was kept within the parameter of 6.5 - 7.5,
   - The final color of the mixture is crystalline amber.

### Example 4

### Obtaining the preferred formulations

**1. General characterization of the process:** The formulation process was carried out under the Batch modalities (batch of 10000L).
   - In the stirring tank, 800 kg of Coconut Fatty Amine Ethoxylate with 15 moles of ethylene oxide were loaded.
   - Under stirring, 700 kg of ethanol indicated in the formula was added, until reaching homogeneity.
   - Under stirring, 1400 kg of water was added until reaching homogeneity.
   - Under stirring, 4300 kg of dimethylamino propalamide of saturated and unsaturated fatty acids were loaded, and stirred until complete dissolution and obtaining a crystalline solution.
   - Under stirring, 1500 kg of the active ingredient Lactofen were loaded, and stirred until complete dissolution and obtaining a crystalline solution.
   - Under stirring, 1400 kg of water was added until reaching homogeneity and final volume.
   - Filtration and quality control of the product were carried out, which, once approved, was released for packaging.
**2. Description of equipment being used:**
   The following pieces of equipment built with stainless steel were used:
   Mixing tank,
   Centrifugal pump,
   Finished product storage tank,
   Packaging machines.
**3. Description of the conditions that were controlled during the process:**
   - Dissolution temperature of the active ingredient, which did not exceed 45 °C,
   - Final density of the mixture, which remained within the parameters 1.035 - 1.045 g/ml at 20°C,
   - The final pH of the mixture was kept within the parameter of 6.5 - 7.5,
   - The final color of the mixture is crystalline amber.

### Example 5

The following tests show how the different microemulsion formulations of the invention control target weeds by reducing the amount of active ingredient applied per hectare and how they behave in tank mixes.

| | Active ingredient | DPAG | Coconut Fatty Amine Ethoxylate | Ethanol | Water |
|---|---|---|---|---|---|
| DERS-1904 | 30 | 40 | 9 | 7 | 25 |
| DERS-1906 | 20 | 35 | 8 | 7 | 30 |
| DERS-1910 | 40 | 45 | 12 | 9 | 20 |

### Materials and methods:

The test was carried out in the field in the town of Sánchez Bs As (33°26'1.76"S; 60°10'10.01"W).

In a Vertic Argiudoll, Fine, Illite, Thermal soil (USDA- Soil Taxonomy V. 2006) with use capacity: II w.

The experimental design used was the completely randomized block design (DBCA). Each treated plot was 2 m wide by 10 m long with paired controls and had a 1 m wide by 10 m long buffer zone. Each treatment was repeated 4 times.

Three different 2,4-D microemulsion compositions were evaluated namely DERS-1904, DERS-1906 and DERS-1910, which are defined in the Table above. They were compared with three standard formulations of 2,4-D namely, 2,4-d choline salt 66.9% SL, 2,4-D 2-ethylhexyl ester 97% EC and 2,4-D dimethylamine salt. 60% SL, and a blank control without application.

Each formulated product was evaluated with two label doses and two application volumes (40 I/ha and 80 I/ha). A dose of 2 I/ha of glyphosate potassium salt 66.2% SL was added to all treatments.

| Treatment | Product | Dose (l/ha) | Volume (l/ha) |
|---|---|---|---|
| 1 | Blank control | 0 | 80 |
| 2 | DERS-1904 | 0.8 | 80 |
| 3 | DERS-1904 | 1.2 | 80 |
| 4 | DERS-1906 | 1.2 | 80 |
| 5 | DERS-1906 | 1.8 | 80 |
| 6 | DERS-1910 | 0.6 | 80 |
| 7 | DERS-1910 | 0.9 | 80 |
| 8 | 2,4-d choline salt 66.9% SL | 1.5 | 80 |
| 9 | 2,4-d choline salt 66.9% SL | 2.5 | 80 |
| 10 | 2,4-D 2-ethylhexyl ester 97% EC | 0.96 | 80 |
| 11 | 2,4-D 2-ethylhexyl ester 97% EC | 1.4 | 80 |
| 12 | 2,4-D dimethylamine salt 60% SL | 0.96 | 80 |
| 13 | 2,4-D dimethylamine salt 60% SL | 1.4 | 80 |
| 14 | Blank control * | 0 | 40 |
| 15 | DERS-1904 * | 0.8 | 40 |
| 16 | DERS-1904 * | 1.2 | 40 |
| 17 | DERS-1906 * | 1.2 | 40 |
| 18 | DERS-1906 * | 1.8 | 40 |
| 19 | DERS-1910 * | 0.6 | 40 |
| 20 | DERS-1910 * | 0.9 | 40 |
| 21 | 2,4-d choline salt 66.9% SL * | 1.5 | 40 |
| 22 | 2,4-d choline salt 66.9% SL * | 2.5 | 40 |
| 23 | 2,4-D 2-ethylhexyl ester 97% EC * | 0.96 | 40 |
| 24 | 2,4-D 2-ethylhexyl ester 97% EC * | 1.4 | 40 |
| 25 | 2,4-D dimethylamine salt 60% SL* | 0.96 | 40 |
| 26 | 2,4-D dimethylamine salt 60% SL* | 1.4 | 40 |

| | | | |
|---|---|---|---|
| *These treatments were not applied since the products 2,4-d choline salt 66.9% SL, 2,4-D 2-ethylhexyl ester 97% EC and 2,4-D dimethylamine salt 60% SL showed tank incompatibility when mixed with glyphosate potassium salt 66.2% SL at a volume of 40 I/ha. | | | |

Herbicides were sprayed for full coverage, on corn stubble. To do this, a van with an adaptation of a CO₂ spray backpack and four flat fan tablets was available. A flat fan tablet (TT110015) was used at 2 bar pressure and at a distance between peaks of 0.52 m. The average speed was 6.9 km/ha, the droplet size achieved was medium (175-250 microns).

The application was made on November 20, 2019

The phenological state of Conyza bonariensis "black branch" at the time of application was vegetative from 7 to 10 cm in height.

The weather conditions were:

| | |
|---|---|
| T (°C) | 28.2 |
| HR (%) | 56 |
| *□ T (°C) | 6 |
| Speed (km/h) | 5.5 |

The methodology used to evaluate the control efficacy of the treatments on the present weed was the one proposed by ALAM at 7, 14 and 21 DAA (days after application).

### Results:

| DDA | Treatment | Mean ± SE | LSD Fisher | p-value |
|---|---|---|---|---|
| 7 | 1 | 0 ± 2.39 | a | <0.0001 |
| | 2 | 22.5 ± 2.39 | b | |
| | 3 | 37.5 ± 2.39 | cd | |
| | 4 | 21.25 ± 2.39 | b | |
| | 5 | 37.5 ± 2.39 | cd | |
| | 6 | 23.75 ± 2.39 | b | |
| | 7 | 37.5 ± 2.39 | cd | |
| | 8 | 31.25 ± 2.39 | bcd | |
| | 9 | 40 ± 2.39 | d | |
| | 10 | 27.5 ± 2.39 | bc | |
| | 11 | 41.25 ± 2.39 | d | |
| | 12 | 21.25 ± 2.39 | b | |
| | 13 | 41.25 ± 2.39 | d | |
| 14 | 1 | 0 ± 3.94 | a | <0.0001 |
| | 2 | 49.75 ± 3.94 | bc | |
| | 3 | 63.375 ± 3.94 | c | |
| | 4 | 43.25 ± 3.94 | b | |
| | 5 | 68.5 ± 3.94 | c | |
| | 6 | 49.875 ± 3.94 | bc | |
| | 7 | 65.25 ± 3.94 | c | |
| | 8 | 42.125 ± 3.94 | b | |
| | 9 | 59.25 ± 3.94 | bc | |
| | 10 | 53.125 ± 3.94 | bc | |
| | 11 | 63.875 ± 3.94 | c | |
| | 12 | 40.25 ± 3.94 | b | |
| | 13 | 65 ± 3.94 | c | |
| 21 | 1 | 0 ± 2.55 | a | <0.0001 |
| | 2 | 85 ± 2.55 | bc | |
| | 3 | 96.25 ± 2.55 | c | |
| | 4 | 85 ± 2.55 | bc | |
| | 5 | 91.125 ± 2.55 | bc | |
| | 6 | 84.05 ± 2.55 | bc | |
| | 7 | 90 ± 2.55 | bc | |
| | 8 | 81.5 ± 2.55 | b | |
| | 9 | 95 ± 2.55 | c | |
| | 10 | 86.5 ± 2.55 | bc | |
| | 11 | 95 ± 2.55 | c | |
| | 12 | 86.55 ± 2.55 | bc | |
| | 13 | 94.875 ± 2.55 | c | |

Conclusions: In the three days of evaluation there were significant differences between the absolute control (TA) and the applied treatments.

In the three days of evaluation there were significant differences between the treatments applied, both at different doses between the same product and between different formulated products.

Taking into account the minimum doses applied, the reduction in the amount of Active Ingredient per hectare ranged between 50% - 65%, obtaining a similar, equal or greater control of the three types of formulations (DERS-1904, DERS-1906 AND DERS -1910) with respect to the traditional formulations on the market.

Taking into account the maximum doses applied, the reduction in the amount of Active Ingredient per hectare ranged between 48% - 68%, obtaining a similar, equal or greater control of the three types of formulations (DERS-1904, DERS-1906 AND DERS -1910) with respect to the traditional formulations on the market.

All the formulations used obtained a control above 80% at 21 daa.

### Example 6

The following tests show how the different microemulsion formulations of the invention control target weeds by reducing the amount of active ingredient applied per hectare and how they behave in tank mixes.

| | Active ingredient | DPAG | Coconut Fatty Amine Ethoxylate | Ethanol | Water |
|---|---|---|---|---|---|
| CERS-1807 | 20 % | 40 % | 9% | 8 % | 25% |
| CERS-1809 | 27 % | 45 % | 11 % | 9% | 20 % |
| CERS-1811 | 13 % | 36 % | 8 % | 7% | 30 % |

### Materials and methods:

The test was carried out in the field in the town of Sánchez Bs As (33°26'1.76"S; 60°10'10.01"W).

In a Vertic Argiudoll, Fine, Illite, Thermal soil (USDA- Soil Taxonomy V. 2006) with use capacity: II w.

The experimental design used was the completely randomized block design (DBCA). Each treated plot was 2 m wide by 10 m long with paired controls and had a 1 m wide by 10 m long buffer zone. Each treatment was repeated 4 times.

Three different Dicamba microemulsion compositions (CERS-1807 and CERS-1809 and CERS-1811) were evaluated. They were compared with two standard Dicamba formulations (dicamba dimethylamine salt 57.8% SL and dicamba diglycolamine salt 70.8% SL) and a blank control without application.

Each formulated product was evaluated with two label doses and two application volumes (40 I/ha y 80 I/ha). A dose of 2 I/ha of glyphosate potassium salt 66.2% SL was added to all treatments.

| Treatment | Product | Dose (l/ha) | Volume (l/ha) |
|---|---|---|---|
| 1 | Blank control | 0 | 80 |
| 2 | CERS-1807 | 0.2 | 80 |
| 3 | CERS-1807 | 0.4 | 80 |
| 4 | CERS-1809 | 0.15 | 80 |
| 5 | CERS-1809 | 0.30 | 80 |
| 6 | CERS-1811 | 0.3 | 80 |
| 7 | CERS-1811 | 0.6 | 80 |
| 8 | dicamba dimethylamine salt 57.8% SL | 0.2 | 80 |
| 9 | dicamba dimethylamine salt 57.8% SL | 0.4 | 80 |
| 10 | dicamba diglycolamine salt 70.8% SL | 0.3 | 80 |
| 11 | dicamba diglycolamine salt 70.8% SL | 0.5 | 80 |
| 12 | Blank control * | 0 | 40 |
| 13 | CERS-1807 * | 0.2 | 40 |
| 14 | CERS-1807 * | 0.4 | 40 |
| 15 | CERS-1809 * | 0.15 | 40 |
| 16 | CERS-1809 * | 0.30 | 40 |
| 17 | CERS-1811 * | 0.3 | 40 |
| 18 | CERS-1811 * | 0.6 | 40 |
| 19 | dicamba dimethylamine salt 57.8% SL* | 0.2 | 40 |
| 20 | dicamba dimethylamine salt 57.8% SL* | 0.4 | 40 |
| 21 | dicamba diglycolamine salt 70.8% SL* | 0.3 | 40 |
| 22 | dicamba diglycolamine salt 70.8% SL* | 0.5 | 40 |

| | | | |
|---|---|---|---|
| *These treatments were not applied since the products dicamba dimethylamine salt 57.8% SL and dicamba diglycolamine salt 70.8% SL showed tank incompatibility when mixed with glyphosate potassium salt 66.2% SL at a volume of 40 I/ha. | | | |

Herbicides were sprayed for full coverage, on corn stubble. To do this, a van with an adaptation of a CO₂ spray backpack and four flat fan tablets was available. A flat fan tablet (TT110015) was used at 2 bar pressure and at a distance between peaks of 0.52 m. The average speed was 6.9 km/ha, the droplet size achieved was medium (175-250 microns).

The application was made on November 20, 2019

The phenological state of Conyza bonariensis "black branch" at the time of application was vegetative from 7 to 10 cm in height.

The weather conditions were:

| | |
|---|---|
| T (°C) | 28.2 |
| HR (%) | 56 |
| *□ T (°C) | 6 |
| Speed (km/h) | 5.5 |

The methodology used to evaluate the control efficacy of the treatments on the present weed was the one proposed by ALAM at 7, 14 and 21 DAA.

### Results:

| DDA | Treatment | Mean ± SE | LSD Fisher | p-value |
|---|---|---|---|---|
| 7 | 1 | 0 ± 2.30 | a | <0.0001 |
| | 2 | 27.5 ± 2.30 | b | |
| | 3 | 42.5 ± 2.30 | cd | |
| | 4 | 26.25 ± 2.30 | b | |
| | 5 | 42.5 ± 2.30 | cd | |
| | 6 | 28.75 ± 2.30 | b | |
| | 7 | 42.5 ± 2.30 | cd | |
| | 8 | 36.25 ± 2.30 | bcd | |
| | 9 | 45 ± 2.30 | d | |
| | 10 | 32.5 ± 2.30 | bc | |
| | 11 | 46.25 ± 2.30 | d | |
| 14 | 1 | 0 ± 3.86 | a | <0.0001 |
| | 2 | 53.75 ± 3.86 | bc | |
| | 3 | 67.375 ± 3.86 | c | |
| | 4 | 47.25 ± 3.86 | b | |
| | 5 | 72.5 ± 3.86 | c | |
| | 6 | 53.875 ± 3.86 | bc | |
| | 7 | 69.25 ± 3.86 | c | |
| | 8 | 46.125 ± 3.86 | b | |
| | 9 | 63.25 ± 3.86 | bc | |
| | 10 | 57.125 ± 3.86 | bc | |
| | 11 | 67.875 ± 3.86 | c | |
| 21 | 1 | 0 ± 2.29 | a | <0.0001 |
| | 2 | 88 ± 2.29 | bcd | |
| | 3 | 98.5 ± 2.29 | d | |
| | 4 | 88 ± 2.29 | bcd | |
| | 5 | 94.125 ± 2.29 | bcd | |
| | 6 | 87.05 ± 2.29 | bc | |
| | 7 | 93 ± 2.29 | bcd | |
| | 8 | 84.5 ± 2.29 | b | |
| | 9 | 97.25 ± 2.29 | cd | |
| | 10 | 89.5 ± 2.29 | bcd | |
| | 11 | 98 ± 2.29 | cd | |

Conclusions: In the three days of evaluation there were significant differences between the absolute control (TA) and the applied treatments.

In the three days of evaluation there were significant differences between the treatments applied, both at different doses between the same product and between different formulated products.

Taking into account the minimum doses applied, the reduction in the amount of Active Ingredient per hectare ranged between 58% - 72%, obtaining a similar, equal or greater control of the three types of formulations (CERS-1807 and CERS-1809 and CERS-1811) with respect to the traditional formulations on the market.

Taking into account the maximum doses applied, the reduction in the amount of Active Ingredient per hectare ranged between 56% - 66%, obtaining a similar, equal or greater control of the three types of formulations (CERS-1807 and CERS-1809 and CERS-1811) with respect to the traditional formulations on the market.

All the formulations used obtained a control above 80% at 21 daa.

### Example 7

The following tests show how the different microemulsion formulations of the invention control target weeds by reducing the amount of active ingredient applied per hectare and how they behave in tank mixes.

| | Active ingredient | DPAG | Coconut Fatty Amine Ethoxylate | Ethanol | Agua |
|---|---|---|---|---|---|
| FORS-1703 | 12.5 % | 40 % | 10 % | 7% | 30 % |
| FORS-1707 | 25% | 45 % | 12 % | 9% | 20 % |
| FORS-1709 | 16 % | 42 % | 11 % | 8 % | 26 % |

### Materials and methods:

The test was carried out in the field in the town of Sánchez Bs As (33°26'1.76"S; 60°10'10.01"W).

In a Vertic Argiudoll, Fine, Illite, Thermal soil (USDA- Soil Taxonomy V. 2006) with use capacity: II w.

The experimental design used was the completely randomized block design (DBCA). Each treated plot was 2 m wide by 10 m long with paired controls and had a 1 m wide by 10 m long buffer zone. Each treatment was repeated 4 times.

Three different fomesafen microemulsion compositions (FORS-1703, FORS-1707 and FORS-1709) were evaluated. They were compared with a standard formulation of fomesafen (fomesafen sodium salt 26.2% SL) and a blank control without application.

Each formulated product was evaluated with the label dose and two application volumes (40 I/ha and 80 I/ha). A dose of 2 I/ha of glyphosate potassium salt 66.2% SL was added to all treatments.

| Treatment | Product | Dose (l/ha) | Volume (l/ha) |
|---|---|---|---|
| 1 | Blank control | 0 | 80 |
| 2 | FORS-1703 | 1.3 | 80 |
| 3 | FORS-1707 | 0.65 | 80 |
| 4 | FORS-1709 | 1.0 | 80 |
| 5 | fomesafen sodium salt 26.2 % SL | 1.3 | 80 |
| 6 | Blank control * | 0 | 40 |
| 7 | FORS-1703 * | 1.3 | 40 |
| 8 | FORS-1707 * | 0.65 | 40 |
| 9 | FORS-1709 * | 1.0 | 40 |
| 10 | fomesafen sodium salt 26.2 % SL * | 1.3 | 40 |

| | | | |
|---|---|---|---|
| *These treatments were not applied since the product fomesafen sodium salt 26.2% SL showed tank incompatibility when mixed with glyphosate potassium salt 66.2% SL at a volume of 40 I/ha. | | | |

The herbicides were sprayed for full coverage, on the soybean crop. To do this, a van with an adaptation of a CO2 spray backpack and four flat fan tablets were available. A flat fan tablet (TT110015) was used at 2 bar pressure and at a distance between peaks of 0.52 m. The average speed was 6.9 km/ha, the droplet size achieved was medium (175-250 microns).

The application was made on December 6, 2019

The phenological state of Conyza bonariensis "black branch" at the time of application was vegetative from 10 to 15 cm in height.

The weather conditions were:

| | |
|---|---|
| T (°C) | 31.3 |
| HR (%) | 62 |
| *□ T (°C) | 6 |
| Speed (km/h) | 4.2 |

The methodology used to evaluate the efficacy of weed control and the phytotoxicity in the crop generated by the treatments was the one proposed by ALAM at 7, 14 and 21 DAA.

### Results:

### Control efficacy:

| DAA | Treatment | Mean ± SE | LSD Fisher | p-value |
|---|---|---|---|---|
| 7 | 1 | 0 ± 2.06 | a | <0.0001 |
| | 2 | 42.5 ± 2.06 | b | |
| | 3 | 41.25 ± 2.06 | b | |
| | 4 | 44.5 ± 2.06 | b | |
| | 5 | 40.25 ± 2.06 | b | |
| 14 | 1 | 0 ± 3.54 | a | <0.0001 |
| | 2 | 57.25 ± 3.54 | bc | |
| | 3 | 61.25 ± 3.54 | bc | |
| | 4 | 72 ± 3.54 | c | |
| | 5 | 47.12 ± 3.54 | b | |
| 21 | 1 | 0 ± 1.89 | a | <0.0001 |
| | 2 | 90 ± 1.89 | b | |
| | 3 | 90 ± 1.89 | b | |
| | 4 | 94.85 ± 1.89 | b | |
| | 5 | 88.75 ± 1.89 | b | |

### Control efficacy:

None of the treatments generated phytotoxicity in the crop.

Conclusions: In the three days of evaluation there were significant differences between the absolute control (TA) and the applied treatments.

Taking into account the doses applied per ha, the reduction in the amount of Active Ingredient was 50%, obtaining an equal or greater control of the three types of formulations (FORS-1703, FORS-1707 and FORS-1709) with respect to the traditional formulation on the market.

All the formulations used obtained a control above 90% at 21 daa.

### Example 8

The following tests show how the different microemulsion formulations of the invention control target weeds by reducing the amount of active ingredient applied per hectare and how they behave in tank mixes.

| | Active ingredient | DPAG | Coconut Fatty Amine Ethoxylate | Ethanol | Agua |
|---|---|---|---|---|---|
| LARS-2102 | 12 % | 39 % | 9% | 7% | 30 % |
| LARS-2105 | 24 % | 45 % | 12 % | 9% | 20 % |
| LARS-2109 | 18 % | 42 % | 10 % | 8 % | 22 % |

### Materials and methods:

The test was carried out in the field in the town of Sánchez Bs As (33°26'1.76"S; 60°10'10.01"W).

In a Vertic Argiudoll, Fine, Illite, Thermal soil (USDA- Soil Taxonomy V. 2006) with use capacity: II w.

The experimental design used was the completely randomized block design (DBCA). Each treated plot was 2 m wide by 10 m long with paired controls and had a 1 m wide by 10 m long buffer zone. Each treatment was repeated 4 times.

Three different lactofen microemulsion compositions (LARS-2102, LARS-2105, and LARS-2109) were evaluated. They were compared with a standard formulation of lactofen (lactofen 24% EC) and a blank control without application.

Each formulated product was evaluated with the label dose and two application volumes (40 I/ha and 80 I/ha). A dose of 2 I/ha of glyphosate potassium salt 66.2% SL was added to all treatments.

| Treatment | Product | Dose (l/ha) | Volume (l/ha) |
|---|---|---|---|
| 1 | Blank control | 0 | 80 |
| 2 | LARS-2102 | 1.00 | 80 |
| 3 | LARS-2105 | 0.50 | 80 |
| 4 | LARS-2109 | 0.75 | 80 |
| 5 | Lactofen 24% EC | 1.00 | 80 |
| 6 | Blank control * | 0 | 40 |
| 7 | LARS-2102 * | 1 | 40 |
| 8 | LARS-2105 * | 1 | 40 |
| 9 | LARS-2109 * | 1 | 40 |
| 10 | Lactofen 24% EC * | 1 | 40 |

| | | | |
|---|---|---|---|
| * These treatments were not applied since the product lactofen 24 % EC showed tank incompatibility when mixed with glyphosate potassium salt 66.2% SL at a volume of 40 I/ha. | | | |

The herbicides were sprayed for full coverage, on the soybean crop. To do this, a van with an adaptation of a CO2 spray backpack and four flat fan tablets were available. A flat fan tablet (TT110015) was used at 2 bar pressure and at a distance between peaks of 0.52 m. The average speed was 6.9 km/ha, the droplet size achieved was medium (175 - 250 microns).

The application was made on December 6, 2019

The phenological state of Conyza bonariensis "black branch" at the time of application was vegetative from 10 to 15 cm in height.

The weather conditions were:

| | |
|---|---|
| T (°C) | 31.3 |
| HR (%) | 62 |
| *□ T (°C) | 6 |
| Speed (km/h) | 4.2 |

The methodology used to evaluate the efficacy of weed control and phytotoxicity in the crop generated by the treatments was the one proposed by ALAM at 7, 14 and 21 DAA.

### Results:

### Control efficacy:

| DAA | Treatment | Mean ± SE | LSD Fisher | p-value |
|---|---|---|---|---|
| 7 | 1 | 0 ± 2.06 | a | <0.0001 |
| | 2 | 39.5 ± 2.06 | b | |
| | 3 | 38.25 ± 2.06 | b | |
| | 4 | 41.5 ± 2.06 | b | |
| | 5 | 37.25 ± 2.06 | b | |
| 14 | 1 | 0 ± 2.45 | a | <0.0001 |
| | 2 | 59.25 ± 2.45 | b | |
| | 3 | 63.25 ± 2.45 | b | |
| | 4 | 68 ± 2.45 | b | |
| | 5 | 60.75 ± 2.45 | b | |
| 21 | 1 | 0 ± 1.79 | a | <0.0001 |
| | 2 | 91 ± 1.79 | b | |
| | 3 | 91 ± 1.79 | b | |
| | 4 | 95.75 ± 1.79 | b | |
| | 5 | 90.75 ± 1.79 | b | |

### Phytotoxicity:

None of the treatments generated phytotoxicity in the crop.

### Conclusions:

In the three days of evaluation there were significant differences between the absolute control (TA) and the applied treatments.

Taking into account the doses applied per ha, the reduction in the amount of Active Ingredient was 50%, obtaining an equal or greater control of the three types of formulations (LARS-2102, LARS-2105 and LARS-2109) with respect to the traditional formulation on the market.

All the formulations used obtained a control above 90% at 21 daa.

To demonstrate the great compatibility with other agrochemicals in ultra low volume (ULV) applications, the following laboratory studies were carried out using the formulations object of the invention, comparing them with conventional commercial products that are commonly used in the market. The results achieved show that the formulations acquire full compatibility even in very low dilutions, which is beneficial.

### Example 9

Objective: To evaluate the stability in the application solution having different types of 2,4-D formulations in conventional field mixtures, using different application volumes.

### Materials and methods:

The test was carried out in the Chimagro S.A. laboratory in the town of Florencio Varela, Province of Bs As. It is registered in the SENASA laboratory network under Number 00043.

Three different 2,4-D microemulsion compositions (DERS-1904, DERS-1906, and DERS-1910) were evaluated. They were compared with three standard formulations of 2,4-D namely 2,4-d choline salt 66.9% SL, 2,4-D 2-ethylhexyl ester 97% EC and 2,4-D dimethylamine salt 60 % SL. They were tested as the only product in the solution and in combination with glyphosate potassium salt 66.2% SL, acid equivalent 54% w/v.

In turn, the different mixtures were tested at different application volumes (80, 40, 20 and 10 I/ha), with the aim of simulating optimal application conditions to situations of ultra-low volume of water, which correspond to terrestrial and aerial applications.

The doses chosen for the test were selected taking into account the maximum label doses.

The amount of product needed to simulate the different application solutions is shown in column 5 of the table below:

| Test No, | Product | Doses (l/ha) | Volume (l/ha) | Volume in test tube (cm3/100ml) |
|---|---|---|---|---|
| 1 | 2,4-D dimethylamine salt 60% SL | 1,4 | 80 | 1.75 |
| 2 | 2,4-D dimethylamine salt 60% SL + Glyphosate potassium salt 66.2% SL | 1,4+ 2 | 80 | 1.75 + 2.5 |
| 3 | 2,4-D dimethylamine salt 60% SL | 1,4 | 40 | 3.5 |
| 4 | 2,4-D dimethylamine salt 60% SL + Glyphosate potassium salt 66.2% SL | 1,4+ 2 | 40 | 3.5 + 5.0 |
| 5 | 2,4-D dimethylamine salt 60% SL | 1,4 | 20 | 7 |
| 6 | 2,4-D dimethylamine salt 60% SL + Glyphosate potassium salt 66.2% SL | 1,4+ 2 | 20 | 7 + 10.0 |
| 7 | 2,4-D dimethylamine salt 60% SL | 1,4 | 10 | 14 |
| 8 | 2,4-D dimethylamine salt 60% SL + Glyphosate potassium salt 66.2% SL | 1,4+ 2 | 10 | 14+ 20.0 |
| 9 | 2,4-d choline salt 66.9% SL | 2.5 | 80 | 3.13 |
| 10 | 2,4-d choline salt 66.9% SL + Glyphosate potassium salt 66.2% SL | 2.5+ 2 | 80 | 3.13 + 2.5 |
| 11 | 2,4-d choline salt 66.9% SL | 2.5 | 40 | 6.25 |
| 12 | 2,4-d choline salt 66.9% SL + Glyphosate potassium salt 66.2% SL | 2.5+ 2 | 40 | 6.25 + 5.0 |
| 13 | 2,4-d choline salt 66.9% SL | 2.5 | 20 | 12.5 |
| 14 | 2,4-d choline salt 66.9% SL + Glyphosate potassium salt 66.2% SL | 2.5+ 2 | 20 | 12.5 + 10.0 |
| 15 | 2,4-D choline salt 66.9% SL | 2.5 | 10 | 25 |
| 16 | 2,4-d choline salt 66.9% SL + Glyphosate potassium salt 66.2% SL | 2.5+ 2 | 10 | 25 + 20.0 |
| 17 | 2,4-D 2-ethylhexyl ester 97% EC | 1.4 | 80 | 1.75 |
| 18 | 2,4-D 2-ethylhexyl ester 97% EC + Glyphosate potassium salt 66.2% SL | 1.4 + 2 | 80 | 1.75 + 2.5 |
| 19 | 2,4-D 2-ethylhexyl ester 97% EC | 1.4 | 40 | 3.5 |
| 20 | 2,4-D 2-ethylhexyl ester 97% EC + Glyphosate potassium salt 66.2% SL | 1.4 + 2 | 40 | 3.5 + 5.0 |
| 21 | 2,4-D 2-ethylhexyl ester 97% EC | 1.4 | 20 | 7 |
| 22 | 2,4-D 2-ethylhexyl ester 97% EC + Glyphosate potassium salt 66.2% SL | 1.4 + 2 | 20 | 7 + 10.0 |
| 23 | 2,4-D 2-ethylhexyl ester 97% EC | 1.4 | 10 | 14 |
| 24 | 2,4-D 2-ethylhexyl ester 97% EC + Glyphosate potassium salt 66.2% SL | 1.4 + 2 | 10 | 14+ 20.0 |
| 25 | DERS-1904 | 1.2 | 80 | 1.5 |
| 26 | DERS-1904 + Glyphosate potassium salt 66.2% SL | 1.2 + 2 | 80 | 1.5 + 2.5 |
| 27 | DERS-1904 | 1.2 | 40 | 3 |
| 28 | DERS-1904 + Glyphosate potassium salt 66.2% SL | 1.2 + 2 | 40 | 3 + 5.0 |
| 29 | DERS-1904 | 1.2 | 20 | 6 |
| 30 | DERS-1904 + Glyphosate potassium salt 66.2% SL | 1.2 + 2 | 20 | 6+10.0 |
| 31 | DERS-1904 | 1.2 | 10 | 12 |
| 32 | DERS-1904 + Glyphosate potassium salt 66.2% SL | 1.2 + 2 | 10 | 12+20.0 |
| 33 | DERS-1906 | 1.8 | 80 | 1.5 |
| 34 | DERS-1906 + Glyphosate potassium salt 66.2% SL | 1.8 + 2 | 80 | 1.5 + 2.5 |
| 35 | DERS-1906 | 1.8 | 40 | 3 |
| 36 | DERS-1906 + Glyphosate potassium salt 66.2% SL | 1.8 + 2 | 40 | 3 + 5.0 |
| 37 | DERS-1906 | 1.8 | 20 | 6 |
| 38 | DERS-1906 + Glyphosate potassium salt 66.2% SL | 1.8 + 2 | 20 | 6 + 10.0 |
| 39 | DERS-1906 | 1.8 | 10 | 12 |
| 40 | DERS-1906 + Glyphosate potassium salt 66.2% SL | 1.8 + 2 | 10 | 12 + 20.0 |
| 41 | DERS-1910 | 0.9 | 80 | 1.5 |
| 42 | DERS-1910+ Glyphosate potassium salt 66.2% SL | 0.9 + 2 | 80 | 1.5 + 2.5 |
| 43 | DERS-1910 | 0.9 | 40 | 3 |
| 44 | DERS-1910+ Glyphosate potassium salt 66.2% SL | 0.9 + 2 | 40 | 3+ 5.0 |
| 45 | DERS-1910 | 0.9 | 20 | 6 |
| 46 | DERS-1910+ Glyphosate potassium salt 66.2% SL | 0.9 + 2 | 20 | 6 + 10.0 |
| 47 | DERS-1910 | 0.9 | 10 | 12 |
| 48 | DERS-1910+ Glyphosate potassium salt 66.2% SL | 0.9 + 2 | 10 | 12 + 20.0 |

Columns of the previous table: Test identification number, product tested, field dose used, volume of water applied to the field, amount of formulated product applied in the 100 ml test tube.

To carry out the compatibility tests, 100 ml glass test tubes with an IVA brand hermetic lid were used with a precision of + 0.5 ml. For the preparation of the mixture, first 50 ml of water were placed, then the amount required for each application volume of 2,4-D and then the glyphosate for the treatments as appropriate. Finally, it was completed with water to final volume.

Once the solution is complete, the container was closed and inverted 10 times, turning it 180°.

After 10 inversions, the test tube is left to rest and it is observed if there is any precipitate or supernatant at 30 seconds, 30 minutes and 2 hours.

In turn, in the case of the solutions in which a precipitate, meniscus or foam was formed, their height was measured.

### Results obtained:

| Treatment | Product | Dose (l/ha) | Volume (l/ha) | Observations(30 sec) | Observations (30 min) | Observations (2 hours) |
|---|---|---|---|---|---|---|
| 1 | 2,4-D dimethylamine salt 60% SL | 1.4 | 80 | Crystalline solution | Crystalline solution | Crystalline solution |
| 2 | 2,4-D dimethylamine salt 60% SL + Glyphosate potassium salt 66.2% SL | 1.4+2 | 80 | Crystalline solution | Crystalline solution | Crystalline solution |
| 3 | 2,4-D dimethylamine salt 60% SL | 1.4 | 40 | Crystalline solution | Crystalline solution | Crystalline solution |
| 4 | 2,4-D dimethylamine salt 60% SL + Glyphosate potassium salt 66.2% SL | 1.4+2 | 40 | Solution starting to precipitate | Solution with solid particles and 8 ml of precipitate | Solution with solid particles and 8 ml of precipitate |
| 5 | 2,4-D dimethylamine salt 60% SL | 1.4 | 20 | Slightly opalescent solution | Opalescent solution | Opalescent solution |
| 6 | 2,4-D dimethylamine salt 60% SL + Glyphosate potassium salt 66.2% SL | 1.4+2 | 20 | Appearance of precipitate | Clear solution with solid at the bottom. 18 ml precipitate | Clear solution with solid at the bottom. 22 ml precipitate |
| 7 | 2,4-D dimethylamine salt 60% SL | 1.4 | 10 | Slightly opalescent solution with increased caramel color | Opalescent solution | Opalescent solution |
| 8 | 2,4-D dimethylamine salt 60% SL + Glyphosate potassium salt 66.2% SL | 1.4+2 | 10 | Appearance of precipitate | Totally fallen product. 78 ml precipitate | Totally fallen product. 68 ml precipitate |
| 9 | 2,4-d choline salt 66.9% SL | 2.5 | 80 | Opalescent emulsion | Opalescent emulsion | Opalescent emulsion |
| 10 | 2,4-d choline salt 66.9% SL + Glyphosate potassium salt 66.2% SL | 2.5 + 2 | 80 | Slightly ocher-colored opalescent emulsion | Slightly ocher-colored opalescent emulsion | Slightly ocher-colored opalescent emulsion |
| 11 | 2,4-d choline salt 66.9% SL | 2.5 | 40 | Opalescent emulsion | Opalescent emulsion | Opalescent emulsion |
| 12 | 2,4-d choline salt 66.9% SL + Glyphosate potassium salt 66.2% SL | 2.5 + 2 | 40 | Slightly colored opalescent emulsion | Slightly colored opalescent emulsion | Slightly colored opalescent emulsion and precipitate on walls |
| 13 | 2,4-d choline salt 66.9% SL | 2.5 | 20 | Opalescent emulsion | White emulsion | White emulsion |
| 14 | 2,4-d choline salt 66.9% SL + Glyphosate potassium salt 66.2% SL | 2.5 + 2 | 20 | Poor Slightly colored opalescent emulsion | Emulsion with 23 ml of precipitate | Emulsion with 20 ml of precipitate |
| 15 | 2,4-d choline salt 66.9% SL | 2.5 | 10 | White emulsion | White emulsion | White emulsion |
| 16 | 2,4-d choline salt 66.9% SL + Glyphosate potassium salt 66.2% SL | 2.5 + 2 | 10 | Poor ocher emulsion, start of precipitate | Totally fallen ocher emulsion with 65 ml of precipitate | Totally fallen ocher emulsion with 61 ml of precipitate |
| 17 | 2,4-D 2-ethylhexyl ester 97% EC | 1.4 | 80 | Opalescent emulsion | Opalescent emulsion | Opalescent emulsion |
| 18 | 2,4-D 2-ethylhexyl ester 97% EC + Glyphosate potassium salt 66.2% SL | 1.4+2 | 80 | Opalescent emulsion | Opalescent emulsion | Opalescent emulsion |
| 19 | 2,4-D 2-ethylhexyl ester 97% EC | 1.4 | 40 | Opalescent emulsion | Opalescent emulsion | Opalescent emulsion |
| 20 | 2,4-D 2-ethylhexyl ester 97% EC + Glyphosate potassium salt 66.2% SL | 1.4 + 2 | 40 | Slightly colored opalescent emulsion | Slightly colored opalescent emulsion | Slightly colored opalescent emulsion and precipitate on walls |
| 21 | 2,4-D 2-ethylhexyl ester 97% EC | 1.4 | 20 | Opalescent emulsion | Opalescent emulsion | Opalescent emulsion |
| 22 | 2,4-D 2-ethylhexyl ester 97% EC + Glyphosate potassium salt 66.2% SL | 1.4 + 2 | 20 | Poor Slightly colored opalescent emulsion | Emulsion with 4 ml of precipitate | Emulsion with 8 ml of precipitate |
| 23 | 2,4-D 2-ethylhexyl ester 97% EC | 1.4 | 10 | Opalescent emulsion | Opalescent emulsion | Opalescent emulsion |
| 24 | 2,4-D 2-ethylhexyl ester 97% EC + Glyphosate potassium salt 66.2% SL | 1.4 + 2 | 10 | Poor opalescent emulsion, start of precipitate | Emulsion with 12 ml of precipitate | Emulsion with 20 ml of precipitate |
| 25 | DERS-1904 | 1.2 | 80 | Crystalline solution | Crystalline solution | Crystalline solution |
| 26 | DERS-1904 + Glyphosate potassium salt 66.2% SL | 1.2 + 2 | 80 | Crystalline solution | Crystalline solution | Crystalline solution |
| 27 | DERS-1904 | 1.2 | 40 | Crystalline solution | Crystalline solution | Crystalline solution |
| 28 | DERS-1904 + Glyphosate potassium salt 66.2% SL | 1.2 + 2 | 40 | Crystalline solution | Crystalline solution | Crystalline solution |
| 29 | DERS-1904 | 1.2 | 20 | Crystalline solution | Crystalline solution | Crystalline solution |
| 30 | DERS-1904 + Glyphosate potassium salt 66.2% SL | 1.2 + 2 | 20 | Crystalline solution | Crystalline solution | Crystalline solution |
| 31 | DERS-1904 | 1.2 | 10 | Crystalline solution | Crystalline solution | Crystalline solution |
| 32 | DERS-1904 + Glyphosate potassium salt 66.2% SL | 1.2 + 2 | 10 | Crystalline solution | Crystalline solution | Crystalline solution |
| 33 | DERS-1906 | 1.8 | 80 | Crystalline solution | Crystalline solution | Crystalline solution |
| 34 | DERS-1906 + Glyphosate potassium salt 66.2% SL | 1.8 + 2 | 80 | Crystalline solution | Crystalline solution | Crystalline solution |
| 35 | DERS-1906 | 1.8 | 40 | Crystalline solution | Crystalline solution | Crystalline solution |
| 36 | DERS-1906 + Glyphosate potassium salt 66.2% SL | 1.8 + 2 | 40 | Crystalline solution | Crystalline solution | Crystalline solution |
| 37 | DERS-1906 | 1.8 | 20 | Crystalline solution | Crystalline solution | Crystalline solution |
| 38 | DERS-1906 + Glyphosate potassium salt 66.2% SL | 1.8 + 2 | 20 | Crystalline solution | Crystalline solution | Crystalline solution |
| 39 | DERS-1906 | 1.8 | 10 | Crystalline solution | Crystalline solution | Crystalline solution |
| 40 | DERS-1906 + Glyphosate potassium salt 66.2% SL | 1.8 + 2 | 10 | Crystalline solution | Crystalline solution | Crystalline solution |
| 41 | DERS-1910 | 0.9 | 80 | Crystalline solution | Crystalline solution | Crystalline solution |
| 42 | DERS-1910 + Glyphosate potassium salt 66.2% SL | 0.9 + 2 | 80 | Crystalline solution | Crystalline solution | Crystalline solution |
| 43 | DERS-1910 | 0.9 | 40 | Crystalline solution | Crystalline solution | Crystalline solution |
| 44 | DERS-1910 + Glyphosate potassium salt 66.2% SL | 0.9 + 2 | 40 | Crystalline solution | Crystalline solution | Crystalline solution |
| 45 | DERS-1910 | 0.9 | 20 | Crystalline solution | Crystalline solution | Crystalline solution |
| 46 | DERS-1910 + Glyphosate potassium salt 66.2% SL | 0.9 + 2 | 20 | Crystalline solution | Crystalline solution | Crystalline solution |
| 47 | DERS-1910 | 0.9 | 10 | Crystalline solution | Crystalline solution | Crystalline solution |
| 48 | DERS-1910 + Glyphosate potassium salt 66.2% SL | 0.9 + 2 | 10 | Crystalline solution | Crystalline solution | Crystalline solution |

Columns of the previous table: Test identification number, product tested, field dose used, volume of water applied to the field, observations at 30 sec, 30 min and 2 hours.

### Conclusions:

In all cases DERS-1904, DERS-1906 and DERS-1910 products maintained adequate tank compatibility for field application at all application volumes when mixed with Glyphosate potassium salt 66.2% SL. Likewise, 2,4-D 2-ethylhexyl ester 97% EC also maintained adequate tank compatibility at all application volumes.

For the products 2,4-D dimethylamine salt 60% SL and 2,4-d choline salt 66.9% SL, the volume of 80 I/ha maintained adequate tank compatibility for field application. For volumes of 40, 20 and 10 I/ha, it did not maintain adequate tank compatibility, so field application is not feasible at these volumes

All products showed adequate compatibility in all volumes of water when not mixed with Glyphosate potassium salt 66.2% SL.

### Example 10

Objective: To evaluate the stability in the application solution having different types of dicamba formulations in conventional field mixtures, using different application volumes.

### Materials and methods:

The test was carried out in the Chimagro S.A. laboratory in the town of Florencio Varela, Province of Bs As. It is registered in the SENASA laboratory network under Number 00043.

Three different Dicamba microemulsion compositions (CERS-1807, CERS-1809 and CERS-1811) were evaluated. They were compared with two standard Dicamba formulations (dicamba dimethylamine salt 57.8% SL and dicamba diglycolamine salt 70.8% SL). They were tested as a single product in the solution and in combination with glyphosate potassium salt 66.2% SL (acid equivalent 54% w/v).

In turn, the different mixtures were tested at different application volumes (80, 40, 20 and 10 I/ha), with the aim of simulating optimal application conditions to situations of ultra-low volume of water, which correspond to terrestrial and aerial applications.

The doses chosen for the test were set in accordance with the maximum label doses.

The amount of product needed to simulate the different application solutions is shown in column 5 of the following table:

| Test No. | Product | Dose(l/ha) | Volume (l/ha) | Volume in test tube (cm3/100ml) |
|---|---|---|---|---|
| 1 | dicamba dimethylamine salt 57.8% SL | 0.4 | 80 | 0.5 |
| 2 | dicamba dimethylamine salt 57.8% SL + Glyphosate potassium salt 66.2% SL | 0.4 + 2 | 80 | 0.5 + 2.5 |
| 3 | dicamba dimethylamine salt 57.8% SL | 0.4 | 40 | 1.0 |
| 4 | dicamba dimethylamine salt 57.8% SL + Glyphosate potassium salt 66.2% SL | 0.4 + 2 | 40 | 1.0 + 5.0 |
| 5 | dicamba dimethylamine salt 57.8% SL | 0.4 | 20 | 2.0 |
| 6 | dicamba dimethylamine salt 57.8% SL + Glyphosate potassium salt 66.2% SL | 0.4 + 2 | 20 | 2.0 + 10.0 |
| 7 | dicamba dimethylamine salt 57.8% SL | 0.4 | 10 | 4.0 |
| 8 | dicamba dimethylamine salt 57.8% SL + Glyphosate potassium salt 66.2% SL | 0.4 + 2 | 10 | 4.0 + 20.0 |
| 9 | dicamba diglycolamine salt 70.8% SL | 0.5 | 80 | 0.625 |
| 10 | dicamba diglycolamine salt 70.8% SL + Glyphosate potassium salt 66.2% SL | 0.5 + 2 | 80 | 0.625 + 2.5 |
| 11 | dicamba diglycolamine salt 70.8% SL | 0.5 | 40 | 1.25 |
| 12 | dicamba diglycolamine salt 70.8% SL + Glyphosate potassium salt 66.2% SL | 0.5 + 2 | 40 | 1.25 + 5.0 |
| 13 | dicamba diglycolamine salt 70.8% SL | 0.5 | 20 | 2.5 |
| 14 | dicamba diglycolamine salt 70.8% SL + Glyphosate potassium salt 66.2% SL | 0.5 + 2 | 20 | 2.5 + 10.0 |
| 15 | dicamba diglycolamine salt 70.8% SL | 0.5 | 10 | 5.0 |
| 16 | dicamba diglycolamine salt 70.8% SL + Glyphosate potassium salt 66.2% SL | 0.5 + 2 | 10 | 5.0 + 20.0 |
| 17 | CERS-1807 | 0.4 | 80 | 0.5 |
| 18 | CERS-1807 + Glyphosate potassium salt 66.2% SL | 0.4 + 2 | 80 | 0.5 + 2.5 |
| 19 | CERS-1807 | 0.4 | 40 | 1.0 |
| 20 | CERS-1807 + Glyphosate potassium salt 66.2% SL | 0.4 + 2 | 40 | 1.0 + 5.0 |
| 21 | CERS-1807 | 0.4 | 20 | 2.0 |
| 22 | CERS-1807 + Glyphosate potassium salt 66.2% SL | 0.4 + 2 | 20 | 2.0 + 10.0 |
| 23 | CERS-1807 | 0.4 | 10 | 4.0 |
| 24 | CERS-1807 + Glyphosate potassium salt 66.2% SL | 0.4 + 2 | 10 | 4.0 + 20.0 |
| 25 | CERS-1809 | 0.3 | 80 | 0.5 |
| 26 | CERS-1809 + Glyphosate potassium salt 66.2% SL | 0.3 + 2 | 80 | 0.5 + 2.5 |
| 27 | CERS-1809 | 0.3 | 40 | 1.0 |
| 28 | CERS-1809 + Glyphosate potassium salt 66.2% SL | 0.3 + 2 | 40 | 1.0 + 5.0 |
| 29 | CERS-1809 | 0.3 | 20 | 2.0 |
| 30 | CERS-1809 + Glyphosate potassium salt 66.2% SL | 0.3 + 2 | 20 | 2.0 + 10.0 |
| 31 | CERS-1809 | 0.3 | 10 | 4.0 |
| 32 | CERS-1809 + Glyphosate potassium salt 66.2% SL | 0.3 + 2 | 10 | 4.0 + 20.0 |
| 33 | CERS-1811 | 0.6 | 80 | 0.5 |
| 34 | CERS-1811 + Glyphosate potassium salt 66.2% SL | 0.6 + 2 | 80 | 0.5 + 2.5 |
| 35 | CERS-1811 | 0.6 | 40 | 1.0 |
| 36 | CERS-1811 + Glyphosate potassium salt 66.2% SL | 0.6 + 2 | 40 | 1.0 + 5.0 |
| 37 | CERS-1811 | 0.6 | 20 | 2.0 |
| 38 | CERS-1811 + Glyphosate potassium salt 66.2% SL | 0.6 + 2 | 20 | 2.0 + 10.0 |
| 39 | CERS-1811 | 0.6 | 10 | 4.0 |
| 40 | CERS-1811 + Glyphosate potassium salt 66.2% SL | 0.6 + 2 | 10 | 4.0 + 20.0 |

Table columns: Test identification number, product tested, field dose used, volume of water applied to the field, amount of formulated product applied in the 100 ml test tube.

To carry out the compatibility tests, 100 ml glass test tubes with an IVA brand hermetic lid were used with a precision of + 0.5 ml. For the preparation of the mixture, first 50 ml of water were placed, then the amount required for each application volume of dicamba and then the glyphosate for the treatments as appropriate and finally it was completed with water up to the final volume. Once the solution is complete, the container was closed and inverted 10 times, turning it 180°.

| Treatment | Product | Dose (l/ha) | Volume (l/ha) | Observations (30 sec) | Observations (30 min) | Observation s (2 hours) |
|---|---|---|---|---|---|---|
| 1 | dicamba dimethylamine salt 57.8% SL | 0.4 | 80 | Crystalline solution | Crystalline solution | Crystalline solution |
| 2 | dicamba dimethylamine salt 57.8% SL + Glyphosate potassium salt 66.2% SL | 0.4 + 2 | 80 | Crystalline solution | Crystalline solution | Crystalline solution |
| 3 | dicamba dimethylamine salt 57.8% SL | 0.4 | 40 | Crystalline solution | Crystalline solution | Crystalline solution |
| 4 | dicamba dimethylamine salt 57.8% SL + Glyphosate potassium salt 66.2% SL | 0.4 + 2 | 40 | Crystalline solution | Solution starting to precipitate | Solution with solid particles and 2 ml of precipitate |
| 5 | dicamba dimethylamine salt 57.8% SL | 0.4 | 20 | Crystalline solution | Crystalline solution | Crystalline solution |
| 6 | dicamba dimethylamine salt 57.8% SL + Glyphosate potassium salt 66.2% SL | 0.4 + 2 | 20 | Solution starting to precipitate | Solution with solid particles and 2 ml of precipitate | Solution with solid particles and 2 ml of precipitate |
| 7 | dicamba dimethylamine salt 57.8% SL | 0.4 | 10 | Crystalline solution | Crystalline solution | Crystalline solution |
| 8 | dicamba dimethylamine salt 57.8% SL + Glyphosate potassium salt 66.2% SL | 0.4 + 2 | 10 | Solution starting to precipitate | Solution with solid particles and 4 ml of precipitate | Solution with solid particles and 4 ml of precipitate |
| 9 | Dicamba diglycolamine salt 70.8% SL | 0.5 | 80 | Crystalline solution | Crystalline solution | Crystalline solution |
| 10 | Dicamba diglycolamine salt 70.8% SL + Glyphosate potassium salt 66.2% SL | 0.5 + 2 | 80 | Crystalline solution | Crystalline solution | Crystalline solution |
| 11 | Dicamba diglycolamine salt 70.8% SL | 0.5 | 40 | Crystalline solution | Crystalline solution | Crystalline solution |
| 12 | Dicamba diglycolamine salt 70.8% SL + Glyphosate potassium salt 66.2% SL | 0.5 + 2 | 40 | Crystalline solution | Solution starting to precipitate | Solution with solid particles and 2 ml of precipitate |
| 13 | Dicamba diglycolamine salt 70.8% SL | 0.5 | 20 | Crystalline solution | Crystalline solution | Crystalline solution |
| 14 | Dicamba diglycolamine salt 70.8% SL + Glyphosate potassium salt 66.2% SL | 0.5 + 2 | 20 | Solution starting to precipitate | Solution with solid particles and 1 ml of precipitate | Solution with solid particles and 1 ml of precipitate |
| 15 | Dicamba diglycolamine salt 70.8% SL | 0.5 | 10 | Crystalline solution | Crystalline solution | Crystalline solution |
| 16 | Dicamba diglycolamine salt 70.8% SL + Glyphosate potassium salt 66.2% SL | 0.5 + 2 | 10 | Solution starting to precipitate | Solution with solid particles and 1 ml of precipitate | Solution with solid particles and 1 ml of precipitate |
| 17 | CERS-1807 | 0.4 | 80 | Crystalline solution | Crystalline solution | Crystalline solution |
| 18 | CERS-1807 + Glyphosate potassium salt 66.2% SL | 0.4 + 2 | 80 | Crystalline solution | Crystalline solution | Crystalline solution |
| 19 | CERS-1807 | 0.4 | 40 | Crystalline solution | Crystalline solution | Crystalline solution |
| 20 | CERS-1807 + Glyphosate potassium salt 66.2% SL | 0.4 + 2 | 40 | Crystalline solution | Crystalline solution | Crystalline solution |
| 21 | CERS-1807 | 0.4 | 20 | Crystalline solution | Crystalline solution | Crystalline solution |
| 22 | CERS-1807 + Glyphosate potassium salt 66.2% SL | 0.4 + 2 | 20 | Crystalline solution | Crystalline solution | Crystalline solution |
| 23 | CERS-1807 | 0.4 | 10 | Crystalline solution | Crystalline solution | Crystalline solution |
| 24 | CERS-1807 + Glyphosate potassium salt 66.2% SL | 0.4 + 2 | 10 | Crystalline solution | Crystalline solution | Crystalline solution |
| 25 | CERS-1809 | 0.3 | 80 | Crystalline solution | Crystalline solution | Crystalline solution |
| 26 | CERS-1809 + Glyphosate potassium salt 66.2% SL | 0.3 + 2 | 80 | Crystalline solution | Crystalline solution | Crystalline solution |
| 27 | CERS-1809 | 0.3 | 40 | Crystalline solution | Crystalline solution | Crystalline solution |
| 28 | CERS-1809 + Glyphosate potassium salt 66.2% SL | 0.3 + 2 | 40 | Crystalline solution | Crystalline solution | Crystalline solution |
| 29 | CERS-1809 | 0.3 | 20 | Crystalline solution | Crystalline solution | Crystalline solution |
| 30 | CERS-1809 + Glyphosate potassium salt 66.2% SL | 0.3 + 2 | 20 | Crystalline solution | Crystalline solution | Crystalline solution |
| 31 | CERS-1809 | 0.3 | 10 | Crystalline solution | Crystalline solution | Crystalline solution |
| 32 | CERS-1809 + Glyphosate potassium salt 66.2% SL | 0.3 + 2 | 10 | Crystalline solution | Crystalline solution | Crystalline solution |
| 33 | CERS-1811 | 0.6 | 80 | Crystalline solution | Crystalline solution | Crystalline solution |
| 34 | CERS-1811 + Glyphosate potassium salt 66.2% SL | 0.6 + 2 | 80 | Crystalline solution | Crystalline solution | Crystalline solution |
| 35 | CERS-1811 | 0.6 | 40 | Crystalline solution | Crystalline solution | Crystalline solution |
| 36 | CERS-1811 + Glyphosate potassium salt 66.2% SL | 0.6 + 2 | 40 | Crystalline solution | Crystalline solution | Crystalline solution |
| 37 | CERS-1811 | 0.6 | 20 | Crystalline solution | Crystalline solution | Crystalline solution |
| 38 | CERS-1811 + Glyphosate potassium salt 66.2% SL | 0.6 + 2 | 20 | Crystalline solution | Crystalline solution | Crystalline solution |
| 39 | CERS-1811 | 0.6 | 10 | Crystalline solution | Crystalline solution | Crystalline solution |
| 40 | CERS-1811 + Glyphosate potassium salt 66.2% SL | 0.6 + 2 | 10 | Crystalline solution | Crystalline solution | Crystalline solution |

After 10 inversions, the test tube is left to rest and it is observed if there is any precipitate or supernatant at 30 seconds, 30 minutes and 2 hours.

In turn, in the case of the solutions in which a precipitate, meniscus or foam was formed, their height was measured.

### Results:

Columns of the previous table: Test identification number, product tested, field dose used, volume of water applied to the field, observations at 30 sec, 30 min and 2 hours.

### Conclusions:

In all cases the CERS-1807, CERS-1809 and CERS-1811 products maintained adequate tank compatibility for field application at all application volumes when mixed with Glyphosate potassium salt 66.2% SL.

For the products dicamba dimethylamine salt 57.8% SL and Dicamba diglycolamine salt 70.8% SL, the volume of 80 I/ha maintained adequate tank compatibility for field application. For volumes of 40, 20 and 10 I/ha, it did not maintain adequate tank compatibility, so field application is not feasible at these volumes.

All products showed adequate compatibility in all volumes of water when not mixed with Glyphosate potassium salt 66.2% SL.

### Example 11

Objective: To evaluate the stability in the application solution having different types of fomesafen formulations in conventional field mixtures, using different application volumes.

### Materials and methods:

The test was carried out in the Chimagro S.A. laboratory in the town of Florencio Varela, Province of Bs As. It is registered in the SENASA laboratory network under Number 00043.

Three different fomesafen microemulsion compositions (FORS-1703, FORS-1707 and FORS-1709) were evaluated. They were compared with a standard formulation of fomesafen sodium salt 26.2% SL (acid equivalent 25% w/v). They were tested as a single product in the solution and in combination with glyphosate potassium salt 66.2% SL (acid equivalent 54% w/v).

In turn, the different mixtures were tested at different application volumes (80, 40, 20 and 10 I/ha), with the aim of simulating optimal application conditions to situations of ultra-low volume of water, which correspond to terrestrial and aerial applications.

The doses chosen for the test were selected taking into account the label doses.

The amount of product needed to simulate the different application solutions is shown in column 5 of the following table:

| Test No. | Product | Dose (l/ha) | Volume (l/ha) | Volume in test tube (cm3/100ml) |
|---|---|---|---|---|
| 1 | fomesafen sodium salt 26.2 % SL | 1.3 | 80 | 1.63 |
| 2 | fomesafen sodium salt 26.2 % SL + Glyphosate potassium salt 66.2% SL | 1.3 + 2 | 80 | 1.63 + 2.5 |
| 3 | fomesafen sodium salt 26.2 % SL | 1.3 | 40 | 3.25 |
| 4 | fomesafen sodium salt 26.2 % SL + Glyphosate potassium salt 66.2% SL | 1.3 + 2 | 40 | 3.25 + 5.0 |
| 5 | fomesafen sodium salt 26.2 % SL | 1.3 | 20 | 6.5 |
| 6 | fomesafen sodium salt 26.2 % SL + Glyphosate potassium salt 66.2% SL | 1.3 + 2 | 20 | 6.5 + 10.0 |
| 7 | fomesafen sodium salt 26.2 % SL | 1.3 | 10 | 13.0 |
| 8 | fomesafen sodium salt 26.2 % SL + Glyphosate potassium salt 66.2% SL | 1.3 + 2 | 10 | 13.0 + 20.0 |
| 9 | FORS-1703 | 1.3 | 80 | 1.63 |
| 10 | FORS-1703 + Glyphosate potassium salt 66.2% SL | 1.3 + 2 | 80 | 1.63 + 2.5 |
| 11 | FORS-1703 | 1.3 | 40 | 3.25 |
| 12 | FORS-1703 + Glyphosate potassium salt 66.2% SL | 1.3 + 2 | 40 | 3.25 + 5.0 |
| 13 | FORS-1703 | 1.3 | 20 | 6.5 |
| 14 | FORS-1703 + Glyphosate potassium salt 66.2% SL | 1.3 + 2 | 20 | 6.5 + 10.0 |
| 15 | FORS-1703 | 1.3 | 10 | 13.0 |
| 16 | FORS-1703 + Glyphosate potassium salt 66.2% SL | 1.3 + 2 | 10 | 13.0 + 20.0 |
| 17 | FORS-1707 | 0.65 | 80 | 1.63 |
| 18 | FORS-1707 + Glyphosate potassium salt 66.2% SL | 0.65 + 2 | 80 | 1.63 + 2.5 |
| 19 | FORS-1707 | 0.65 | 40 | 3.25 |
| 20 | FORS-1707 + Glyphosate potassium salt 66.2% SL | 0.65 + 2 | 40 | 3.25 + 5.0 |
| 21 | FORS-1707 | 0.65 | 20 | 6.5 |
| 22 | FORS-1707 + Glyphosate potassium salt 66.2% SL | 0.65 + 2 | 20 | 6.5 + 10.0 |
| 23 | FORS-1707 | 0.65 | 10 | 13.0 |
| 24 | FORS-1707 + Glyphosate potassium salt 66.2% SL | 0.65 + 2 | 10 | 13.0 + 20.0 |
| 25 | FORS-1709 | 1.0 | 80 | 1.63 |
| 26 | FORS-1709 + Glyphosate potassium salt 66.2% SL | 1.0 + 2 | 80 | 1.63 + 2.5 |
| 27 | FORS-1709 | 1.0 | 40 | 3.25 |
| 28 | FORS-1709 + Glyphosate potassium salt 66.2% SL | 1.0 + 2 | 40 | 3.25 + 5.0 |
| 29 | FORS-1709 | 1.0 | 20 | 6.5 |
| 30 | FORS-1709 + Glyphosate potassium salt 66.2% SL | 1.0 + 2 | 20 | 6.5 + 10.0 |
| 31 | FORS-1709 | 1.0 | 10 | 13.0 |
| 32 | FORS-1709 + Glyphosate potassium salt 66.2% SL | 1.0 + 2 | 10 | 13.0 + 20.0 |

Columns of the previous table: Test identification number, product tested, field dose used, volume of water applied to the field, amount of formulated product applied in the 100 ml test tube.

To carry out the compatibility tests, 100 ml glass test tubes with an IVA brand hermetic lid were used with a precision of + 0.5 ml. For the preparation of the mixture, first 50 ml of water were placed, then the amount required for each application volume of fomesafen and then the glyphosate for the treatments as appropriate and finally it was completed with water up to the final volume. Once the solution is complete, the container was closed and inverted 10 times, turning it 180°.

After 10 inversions, the test tube is left to rest and it is observed if there is any precipitate or supernatant at 30 seconds, 30 minutes and 2 hours.

In turn, in the case of the solutions in which a precipitate, meniscus or foam was formed, their height was measured.

The results are shown in the table below:

| Treatments | Product | Dose (l/ha) | Volume (l/ha) | Observations (30 sec) | Observations (30 min) | Observations (2 hours) |
|---|---|---|---|---|---|---|
| 1 | Fomesafen sodium salt 26.2 % SL | 1.3 | 80 | Crystalline solution | Crystalline solution | Crystalline solution |
| 2 | Fomesafen sodium salt 26.2 % SL + Glyphosate potassium salt 66.2% SL | 1.3 + 2 | 80 | Crystalline solution | Crystalline solution | Crystalline solution |
| 3 | Fomesafen sodium salt 26.2 % SL | 1.3 | 40 | Crystalline solution | Crystalline solution | Crystalline solution |
| 4 | Fomesafen sodium salt 26.2 % SL + Glyphosate potassium salt 66.2% SL | 1.3 + 2 | 40 | Yellow solution with 8 ml of solid at the bottom | Yellow solution with 5 ml of solid at the bottom | Yellow solution with 5 ml of solid at the bottom |
| 5 | Fomesafen sodium salt 26.2 % SL | 1.3 | 20 | Crystalline solution | Crystalline solution | Crystalline solution |
| 6 | Fomesafen sodium salt 26.2 % SL + Glyphosate potassium salt 66.2% SL | 1.3 + 2 | 20 | Yellow solution with 8 ml of solid at the bottom | Yellow solution with 5 ml of solid at the bottom | Yellow solution with 5 ml of solid at the bottom |
| 7 | Fomesafen sodium salt 26.2 % SL | 1.3 | 10 | Crystalline solution | Crystalline solution | Crystalline solution |
| 8 | Fomesafen sodium salt 26.2 % SL + Glyphosate potassium salt 66.2% SL | 1.3 + 2 | 10 | Yellow solution with 8 ml of solid at the bottom | Yellow solution with 5 ml of solid at the bottom | Yellow solution with 5 ml of solid at the bottom |
| 9 | FORS-1703 | 1.3 | 80 | Yellow crystalline solution | Yellow crystalline solution | Yellow crystalline solution |
| 10 | FORS-1703 + Glyphosate potassium salt 66.2% SL | 1.3 + 2 | 80 | Yellow crystalline solution | Yellow crystalline solution | Yellow crystalline solution |
| 11 | FORS-1703 | 1.3 | 40 | Yellow crystalline solution | Yellow crystalline solution | Yellow crystalline solution |
| 12 | FORS-1703 + Glyphosate potassium salt 66.2% SL | 1.3 + 2 | 40 | Yellow crystalline solution | Yellow crystalline solution | Yellow crystalline solution |
| 13 | FORS-1703 | 1.3 | 20 | Yellow crystalline solution | Yellow crystalline solution | Yellow crystalline solution |
| 14 | FORS-1703 + Glyphosate potassium salt 66.2% SL | 1.3 + 2 | 20 | Yellow crystalline solution | Yellow crystalline solution | Yellow crystalline solution |
| 15 | FORS-1703 | 1.3 | 10 | Yellow crystalline solution | Yellow crystalline solution | Yellow crystalline solution |
| 16 | FORS-1703 + Glyphosate potassium salt 66.2% SL | 1.3 + 2 | 10 | Yellow crystalline solution | Yellow crystalline solution | Yellow crystalline solution |
| 17 | FORS-1707 | 0.65 | 80 | Yellow crystalline solution | Yellow crystalline solution | Yellow crystalline solution |
| 18 | FORS-1707 + Glyphosate potassium salt 66.2% SL | 0.65 + 2 | 80 | Yellow crystalline solution | Yellow crystalline solution | Yellow crystalline solution |
| 19 | FORS-1707 | 0.65 | 40 | Yellow crystalline solution | Yellow crystalline solution | Yellow crystalline solution |
| 20 | FORS-1707 + Glyphosate potassium salt 66.2% SL | 0.65+ 2 | 40 | Yellow crystalline solution | Yellow crystalline solution | Yellow crystalline solution |
| 21 | FORS-1707 | 0.65 | 20 | Yellow crystalline solution | Yellow crystalline solution | Yellow crystalline solution |
| 22 | FORS-1707 + Glyphosate potassium salt 66.2% SL | 0.65 + 2 | 20 | Yellow crystalline solution | Yellow crystalline solution | Yellow crystalline solution |
| 23 | FORS-1707 | 0.65 | 10 | Yellow crystalline solution | Yellow crystalline solution | Yellow crystalline solution |
| 24 | FORS-1707 + Glyphosate potassium salt 66.2% SL | 0.65+ 2 | 10 | Yellow crystalline solution | Yellow crystalline solution | Yellow crystalline solution |
| 25 | FORS-1709 | 1.0 | 80 | Yellow crystalline solution | Yellow crystalline solution | Yellow crystalline solution |
| 26 | FORS-1709 + Glyphosate potassium salt 66.2% SL | 1.0 + 2 | 80 | Yellow crystalline solution | Yellow crystalline solution | Yellow crystalline solution |
| 27 | FORS-1709 | 1.0 | 40 | Yellow crystalline solution | Yellow crystalline solution | Yellow crystalline solution |
| 28 | FORS-1709 + Glyphosate potassium salt 66.2% SL | 1.0 + 2 | 40 | Yellow crystalline solution | Yellow crystalline solution | Yellow crystalline solution |
| 29 | FORS-1709 | 1.0 | 20 | Yellow crystalline solution | Yellow crystalline solution | Yellow crystalline solution |
| 30 | FORS-1709 + Glyphosate potassium salt 66.2% SL | 1.0 + 2 | 20 | Yellow crystalline solution | Yellow crystalline solution | Yellow crystalline solution |
| 31 | FORS-1709 | 1.0 | 10 | Yellow crystalline solution | Yellow crystalline solution | Yellow crystalline solution |
| 32 | FORS-1709 + Glyphosate potassium salt 66.2% SL | 1.0 + 2 | 10 | Yellow crystalline solution | Yellow crystalline solution | Yellow crystalline solution |

Columns of the previous table: Test identification number, product tested, field dose used, volume of water applied to the field, observations at 30 sec, 30 min and 2 hours.

### Conclusions:

In all cases FORS-1703, FORS-1707 and FORS-1709 products maintained adequate tank compatibility for field application at all application volumes when mixed with Glyphosate potassium salt 66.2% SL.

For the product Fomesafen sodium salt 26.2 % SL at a volume of 80 I/ha, it maintained adequate tank compatibility for field application. For volumes of 40, 20 and 10 I/ha, it did not maintain adequate tank compatibility, so field application is not feasible at these volumes.

All products showed adequate compatibility in all volumes of water when not mixed with Glyphosate potassium salt 66.2% SL.

### Example 12

Objective: To evaluate the stability in the application solution having different types of lactofen formulations in conventional field mixtures, using different application volumes.

### Materials and methods:

The test was carried out in the Chimagro S.A. laboratory in the town of Florencio Varela, Province of Bs As. It is registered in the SENASA laboratory network under Number 00043.

Three different Lactofen microemulsion compositions (LARS-2102, LARS-2105 and LARS-2109) were evaluated. They were compared with a standard formulation of Lactofen 24% EC. They were tested as a single product in the solution and in combination with glyphosate potassium salt 66.2% SL (acid equivalent 54% w/v).

In turn, the different mixtures were tested at different application volumes (80, 40, 20 and 10 I/ha), with the aim of simulating optimal application conditions to situations of ultra-low volume of water, which correspond to terrestrial and aerial applications.

The doses chosen for the test were selected taking into account the label doses.

The amount of product needed to simulate the different application solutions is shown in column 5 of the following table:

| Test No. | Product | Dose (l/ha) | Volume (l/ha) | Volume in test tube (cm3/100ml) |
|---|---|---|---|---|
| 1 | Lactofen 24% EC | 1 | 80 | 1.25 |
| 2 | Lactofen 24% EC + Glyphosate potassium salt 66.2% SL | 1 + 2 | 80 | 1.25+ 2.5 |
| 3 | Lactofen 24% EC | 1 | 40 | 2.5 |
| 4 | Lactofen 24% EC + Glyphosate potassium salt 66.2% SL | 1+2 | 40 | 2.5 + 5.0 |
| 5 | Lactofen 24% EC | 1 | 20 | 5.0 |
| 6 | Lactofen 24% EC + Glyphosate potassium salt 66.2% SL | 1+2 | 20 | 5.0 + 10.0 |
| 7 | Lactofen 24% EC | 1 | 10 | 10.0 |
| 8 | Lactofen 24% EC + Glyphosate potassium salt 66.2% SL | 1 + 2 | 10 | 10.0 + 20.0 |
| 9 | LARS-2102 | 1 | 80 | 1.25 |
| 10 | LARS-2102+ Glyphosate potassium salt 66.2% SL | 1 + 2 | 80 | 1.25+ 2.5 |
| 11 | LARS-2102 | 1 | 40 | 2.5 |
| 12 | LARS-2102+ Glyphosate potassium salt 66.2% SL | 1+2 | 40 | 2.5 + 5.0 |
| 13 | LARS-2102 | 1 | 20 | 5.0 |
| 14 | LARS-2102+ Glyphosate potassium salt 66.2% SL | 1+2 | 20 | 5.0 + 10.0 |
| 15 | LARS-2102 | 1 | 10 | 10.0 |
| 16 | LARS-2102+ Glyphosate potassium salt 66.2% SL | 1 + 2 | 10 | 10.0 + 20.0 |
| 17 | LARS-2105 | 0.5 | 80 | 1.25 |
| 18 | LARS-2105+ Glyphosate potassium salt 66.2% SL | 0.5 + 2 | 80 | 1.25+ 2.5 |
| 19 | LARS-2105 | 0.5 | 40 | 2.5 |
| 20 | LARS-2105+ Glyphosate potassium salt 66.2% SL | 0.5 + 2 | 40 | 2.5 + 5.0 |
| 21 | LARS-2105 | 0.5 | 20 | 5.0 |
| 22 | LARS-2105+ Glyphosate potassium salt 66.2% SL | 0.5 + 2 | 20 | 5.0 + 10.0 |
| 23 | LARS-2105 | 0.5 | 10 | 10.0 |
| 24 | LARS-2105+ Glyphosate potassium salt 66.2% SL | 0.5 + 2 | 10 | 10.0 + 20.0 |
| 25 | LARS-2109 | 0.75 | 80 | 1.25 |
| 26 | LARS-2109+ Glyphosate potassium salt 66.2% SL | 0.75 + 2 | 80 | 1.25+ 2.5 |
| 27 | LARS-2109 | 0.75 | 40 | 2.5 |
| 28 | LARS-2109+ Glyphosate potassium salt 66.2% SL | 0.75 + 2 | 40 | 2.5 + 5.0 |
| 29 | LARS-2109 | 0.75 | 20 | 5.0 |
| 30 | LARS-2109+ Glyphosate potassium salt 66.2% SL | 0.75 + 2 | 20 | 5.0 + 10.0 |
| 31 | LARS-2109 | 0.75 | 10 | 10.0 |
| 32 | LARS-2109+ Glyphosate potassium salt 66.2% SL | 0.75 + 2 | 10 | 10.0 + 20.0 |

Columns of the previous table: Test identification number, product tested, field dose used, volume of water applied to the field, amount of formulated product applied in the 100 ml test tube.

To carry out the compatibility tests, 100 ml glass test tubes with an IVA brand hermetic lid were used with a precision of + 0.5 ml. For the preparation of the mixture, first 50 ml of water were placed, then the amount required for each application volume of lactofen and then the glyphosate for the treatments as appropriate and finally it was completed with water up to the final volume. Once the solution is complete, the container was closed and inverted 10 times, turning it 180°.

After 10 inversions, the test tube is left to rest and it is observed if there is any precipitate or supernatant at 30 seconds, 30 minutes and 2 hours.

In turn, in the case of the solutions in which a precipitate, meniscus or foam was formed, their height was measured.

| Treatments | Product | Dose (l/ha) | Volume (l/ha) | Observations (30 sec) | Observations (30 min) | Observations (2 hours) |
|---|---|---|---|---|---|---|
| 1 | Lactofen 24% EC | 1 | 80 | Opalescent emulsion | Opalescent emulsion | Opalescent emulsion |
| 2 | Lactofen 24% EC + Glyphosate potassium salt 66.2% SL | 1+2 | 80 | Opalescent emulsion | Opalescent emulsion | Opalescent emulsion |
| 3 | Lactofen 24% EC | 1 | 40 | Opalescent emulsion | Opalescent emulsion | Opalescent emulsion |
| 4 | Lactofen 24% EC + Glyphosate potassium salt 66.2% SL | 1+2 | 40 | Slightly colored opalescent emulsion | Slightly colored opalescent emulsion | Slightly colored opalescent emulsion and precipitate on walls |
| 5 | Lactofen 24% EC | 1 | 20 | Opalescent emulsion | Opalescent emulsion | Opalescent emulsion |
| 6 | Lactofen 24% EC + Glyphosate potassium salt 66.2% SL | 1+2 | 20 | Poor Slightly colored opalescent emulsion | Emulsion with 23 ml of precipitate | Emulsion with 20 ml of precipitate |
| 7 | Lactofen 24% EC | 1 | 10 | Opalescent emulsion | Opalescent emulsion | Opalescent emulsion |
| 8 | Lactofen 24% EC + Glyphosate potassium salt 66.2% SL | 1+2 | 10 | Poor Slightly colored opalescent emulsion | Emulsion with 23 ml of precipitate | Emulsion with 20 ml of precipitate |
| 9 | LARS-2102 | 1 | 80 | Crystalline solution | Crystalline solution | Crystalline solution |
| 10 | LARS-2102 + Glyphosate potassium salt 66.2% SL | 1+2 | 80 | Crystalline solution | Crystalline solution | Crystalline solution |
| 11 | LARS-2102 | 1 | 40 | Crystalline solution | Crystalline solution | Crystalline solution |
| 12 | LARS-2102 + Glyphosate potassium salt 66.2% SL | 1+2 | 40 | Crystalline solution | Crystalline solution | Crystalline solution |
| 13 | LARS-2102 | 1 | 20 | Crystalline solution | Crystalline solution | Crystalline solution |
| 14 | LARS-2102 + Glyphosate potassium salt 66.2% SL | 1+2 | 20 | Crystalline solution | Crystalline solution | Crystalline solution |
| 15 | LARS-2102 | 1 | 10 | Crystalline solution | Crystalline solution | Crystalline solution |
| 16 | LARS-2102 + Glyphosate potassium salt 66.2% SL | 1+2 | 10 | Crystalline solution | Crystalline solution | Crystalline solution |
| 17 | LARS-2105 | 0.5 | 80 | Crystalline solution | Crystalline solution | Crystalline solution |
| 18 | LARS-2105 + Glyphosate potassium salt 66.2% SL | 0.5 + 2 | 80 | Crystalline solution | Crystalline solution | Crystalline solution |
| 19 | LARS-2105 | 0.5 | 40 | Crystalline solution | Crystalline solution | Crystalline solution |
| 20 | LARS-2105 + Glyphosate potassium salt 66.2% SL | 0.5 + 2 | 40 | Crystalline solution | Crystalline solution | Crystalline solution |
| 21 | LARS-2105 | 0.5 | 20 | Crystalline solution | Crystalline solution | Crystalline solution |
| 22 | LARS-2105 + Glyphosate potassium salt 66.2% SL | 0.5 + 2 | 20 | Crystalline solution | Crystalline solution | Crystalline solution |
| 23 | LARS-2105 | 0.5 | 10 | Crystalline solution | Crystalline solution | Crystalline solution |
| 24 | LARS-2105 + Glyphosate potassium salt 66.2% SL | 0.5 + 2 | 10 | Crystalline solution | Crystalline solution | Crystalline solution |
| 25 | LARS-2109 | 0.75 | 80 | Crystalline solution | Crystalline solution | Crystalline solution |
| 26 | LARS-2109 + Glyphosate potassium salt 66.2% SL | 0.75 + 2 | 80 | Crystalline solution | Crystalline solution | Crystalline solution |
| 27 | LARS-2109 | 0.75 | 40 | Crystalline solution | Crystalline solution | Crystalline solution |
| 28 | LARS-2109 + Glyphosate potassium salt 66.2% SL | 0.75 + 2 | 40 | Crystalline solution | Crystalline solution | Crystalline solution |
| 29 | LARS-2109 | 0.75 | 20 | Crystalline solution | Crystalline solution | Crystalline solution |
| 30 | LARS-2109 + Glyphosate potassium salt 66.2% SL | 0.75 + 2 | 20 | Crystalline solution | Crystalline solution | Crystalline solution |
| 31 | LARS-2109 | 0.75 | 10 | Crystalline solution | Crystalline solution | Crystalline solution |
| 32 | LARS-2109 + Glyphosate potassium salt 66.2% SL | 0.75 + 2 | 10 | Crystalline solution | Crystalline solution | Crystalline solution |

Columns of the previous table: Test identification number, product tested, field dose used, volume of water applied to the field, observations at 30 sec, 30 min and 2 hours.

### Conclusions:

In all cases the LARS-2102, LARS-2105 and LARS-2109 products maintained adequate tank compatibility for field application at all application volumes when mixed with Glyphosate potassium salt 66.2% SL.

For the product Lactofen 24% EC at a volume of 80 I/ha, it maintained adequate tank compatibility for field application. For volumes of 40, 20 and 10 I/ha, it did not maintain adequate tank compatibility, so field application is not feasible at these volumes.

All products showed adequate compatibility in all volumes of water when not mixed with Glyphosate potassium salt 66.2% SL.

### Example 13

To demonstrate the improved stability of the formulations of the invention, the following studies were carried out following the CIPAC guidelines for stability at high and low temperatures for the formulations object of the invention, comparing them with conventional commercial products that are commonly used on the market. The results achieved demonstrate that the formulation proposed in the present invention is beneficial, since the proposed objectives are actually achieved.

### Stability test at high and low temperatures for formulated products

### 1. Objective

The objective of the test is to determine the robustness in terms of stability that the formulations have under conditions of high and low temperatures. Likewise, the values obtained are used to know the performance that the formulation would have after being stored for a maximum period of two years. The latter makes sense when understanding that those formulations sensitive to high temperatures do not prove to be stable within 2 years, the shelf life required for a commercial product.

### 2. General methodology

### 2.1 Stability at elevated temperatures (CIPAC MT 46.3)

A certain mass of the product was weighed, and the pH and active concentration(s) were determined. It was then stored in an oven inside a caramel-colored glass jar for a period of 14 days at 54°C (±2°C). After this period of time, the sample was removed from the oven and left to stand until it reached room temperature. Before 24 hours, the active ingredient concentration was determined again.

| Results | | |
|---|---|---|
| Product | Initial concentration of active ingredient (% w/v) | Final concentration of active ingredient (% w/v) |
| DERS-1904 | 30.1 | 29.8 |
| DERS-1906 | 20.2 | 20.1 |
| DERS-1910 | 40.1 | 40.0 |
| CERS-1807 | 19.9 | 19.8 |
| CERS-1809 | 27.0 | 27.1 |
| CERS-1811 | 13.1 | 13.0 |
| FORS-1703 | 12.6 | 12.7 |
| FORS-1707 | 25.0 | 25.1 |
| FORS-1709 | 16.0 | 16.0 |
| LARS-2102 | 12.1 | 12.0 |
| LARS-2105 | 24.0 | 23.8 |
| LARS-2109 | 17.9 | 18.1 |

### 2.2 Stability at low temperatures (CIPAC MT 39.3)

50 mL (±1 mL) of the formulation to be evaluated were measured in a volumetric flask and then subjected to a temperature of 0°C (±2°C). Once the hour had elapsed under said operating conditions, the occurrence of liquid or solid separation was observed. Subsequently, the sample was kept under these conditions for 7 days and then the occurrence of phase separation was observed.

In case the sample became heterogeneous, the volume of each phase was taken.

| Results | | |
|---|---|---|
| Formulation: DERS-1904 | 1 hour | 7 days |
| Volume of separated solid (mL) | 0 | 0 |
| Volume of separated liquid (mL) | 0 | 0 |

| Results | | |
|---|---|---|
| Formulation: DERS-1906 | 1 hour | 7 days |
| Volume of separated solid (mL) | 0 | 0 |
| Volume of separated liquid (mL) | 0 | 0 |

| Results | | |
|---|---|---|
| Formulation: DERS-1910 | 1 hour | 7 days |
| Volume of separated solid (mL) | 0 | 0 |
| Volume of separated liquid (mL) | 0 | 0 |

| Results | | |
|---|---|---|
| Formulation: CERS-1807 | 1 hour | 7 days |
| Volume of separated solid (mL) | 0 | 0 |
| Volume of separated liquid (mL) | 0 | 0 |

| Results | | |
|---|---|---|
| Formulation: CERS-1809 | 1 hour | 7 days |
| Volume of separated solid (mL) | 0 | 0 |
| Volume of separated liquid (mL) | 0 | 0 |

| Results | | |
|---|---|---|
| Formulation: CERS-1811 | 1 hour | 7 days |
| Volume of separated solid (mL) | 0 | 0 |
| Volume of separated liquid (mL) | 0 | 0 |

| Results | | |
|---|---|---|
| Formulation: FORS-1703 | 1 hour | 7 days |
| Volume of separated solid (mL) | 0 | 0 |
| Volume of separated liquid (mL) | 0 | 0 |

| Results | | |
|---|---|---|
| Formulation: FORS-1707 | 1 hour | 7 days |
| Volume of separated solid (mL) | 0 | 0 |
| Volume of separated liquid (mL) | 0 | 0 |

| Results | | |
|---|---|---|
| Formulation: FORS-1709 | 1 hour | 7 days |
| Volume of separated solid (mL) | 0 | 0 |
| Volume of separated liquid (mL) | 0 | 0 |

| Results | | |
|---|---|---|
| Formulation: LARS-2102 | 1 hour | 7 days |
| Volume of separated solid (mL) | 0 | 0 |
| Volume of separated liquid (mL) | 0 | 0 |

| Results | | |
|---|---|---|
| Formulation: LARS-2105 | 1 hour | 7 days |
| Volume of separated solid (mL) | 0 | 0 |
| Volume of separated liquid (mL) | 0 | 0 |

| Results | | |
|---|---|---|
| Formulation: LARS-2109 | 1 hour | 7 days |
| Volume of separated solid (mL) | 0 | 0 |
| Volume of separated liquid (mL) | 0 | 0 |

### 3. Discussion of the results

In view of the analyzes carried out, it can be concluded that the formulations under study are stable at high and low temperatures.

## Claims

1. A herbicidal composition in the form of microemulsion (ME) being highly compatible in spray solutions, even in Ultra Low Volume applications , wherein the composition comprises:
| | |
|---|---|
| Dimethylamino propalamide of saturated and unsaturated fatty acids | 35- 45% w/v |
| Coconut Fatty Amine Ethoxylate | 7- 12% w/v |
| Ethanol | 6- 9% w/v |
| Water | 20- 30% w/v |
| Active ingredient | 10- 40% w/v |
said active ingredient being selected from 2,4-D, Dicamba, Fomesafen and Lactofen.

2. The composition of claim 1, wherein the composition comprises:
| | |
|---|---|
| Dimethylamino propalamide of saturated and unsaturated fatty acids | 37%, |
| Coconut Fatty Amine Ethoxylate | 11%, |
| Ethanol | 7%, |
| Water | 22%, and |
| 2,4-D in its acid form | 30%w/v, |
the percentages being expressed in % w/V with respect to the total formulation.

3. The composition of claim 1, wherein the composition comprises:
| | |
|---|---|
| Dimethylamino propalamide of saturated and unsaturated fatty acids | 42%, |
| Coconut Fatty Amine Ethoxylate | 8%, |
| Ethanol | 8%, |
| Water | 28%, and |
| Dicamba in its acid form | 20%, |
the percentages being expressed in % w/V with respect to the total formulation.

4. The composition of claim 1, wherein the composition comprises:
| | |
|---|---|
| Dimethylamino propalamide of saturated and unsaturated fatty acids | 45%, |
| Coconut Fatty Amine Ethoxylate | 9%, |
| Ethanol | 8%, |
| Water | 28%, and |
| Fomesafen in its acid form | 12.5%, |
the percentages being expressed in % w/V with respect to the total formulation.

5. The composition of claim 1, wherein the composition comprises:
| | |
|---|---|
| Dimethylamino propalamide of saturated and unsaturated fatty acids | 43%, |
| Coconut Fatty Amine Ethoxylate | 8%, |
| Ethanol | 7%, |
| Water | 28%, and |
| Lactofen in its acid form | 15%, |
the percentages being expressed in % w/V with respect to the total formulation.

6. A method of preparing the composition according to any one of the preceding claims, wherein the method comprises the steps of:
- loading the theoretical amount of the coconut fatty amine ethoxylate with 15 moles of ethylene oxide in the stirring tank,
- adding under stirring all the desired ethanol, until homogeneity is reached,
- adding under stirring half of the desired water, until homogeneity is achieved,
- loading under stirring the total desired amount of dimethylamino propalamide of saturated and unsaturated fatty acids, and stirring until complete dissolution is achieved and a crystalline solution is obtained,
- loading under stirring the total desired amount of an active ingredient selected from 2,4-D, Dicamba, Fomesafen or Lactofen, and stirring until complete dissolution is achieved and a crystalline solution is obtained,
- adding under stirring the rest of the desired water in the formula, until reaching homogeneity and final volume, and
- filtering the solution being thus homogenized.

7. A tank mix that includes any one of the compositions according to claims 1 to 5 and as complementary agrochemical component includes glyphosate, picloram, atrazine, sulfentrazone, cloransulam, mepiquat, paraquat, imazapyr, imazapic, imazetapyr, or mixtures thereof.

8. A tank mix according to claim 7, wherein the mixture includes 2,4-D and glyphosate as active components.

9. A tank mix according to claim 8, wherein glyphosate is in the form of potassium salt.

10. A tank mix according to claim 7, wherein the mixture includes Dicamba and glyphosate as active components.

11. A tank mix according to claim 10, wherein glyphosate is in the form of potassium salt.

12. A tank mix according to claim 7, wherein the mixture includes Fomesafen and glyphosate as active components.

13. A tank mix according to claim 12, wherein glyphosate is in the form of potassium salt.

14. A tank mix according to claim 7, wherein the mixture includes Lactofen and glyphosate as active components.

15. A tank mix according to claim 14, wherein glyphosate is in the form of potassium salt.

## Patentansprüche

1. Herbizidzusammensetzung in Form einer Mikroemulsion (ME), die in Spraylösungen, sogar in Anwendungen mit ultraniedrigem Volumen, hochkompatibel ist, wobei die Zusammensetzung Folgendes umfasst:
| | |
|---|---|
| Dimethylaminopropalamid von gesättigten und ungesättigten Fettsäurezn | 35-45 % w/v |
| Kokosnuss-Fettamin-Ethoxylat | 7-12 % w/v |
| Ethanol | 6-9 % w/v |
| Wasser | 20-30 % w/v |
| Wirkstoff | 10-40 % w/v |
wobei der Wirkstoff ausgewählt ist aus 2,4-D, Dicamba, Fomesafen und Lactofen.

2. Zusammensetzung nach Anspruch 1, wobei die Zusammensetzung Folgendes umfasst:
| | |
|---|---|
| Dimethylaminopropalamid von gesättigten und ungesättigten Fettsäuren | 37 %, |
| Kokosnuss-Fettamin-Ethoxylat | 11 %, |
| Ethanol | 7 %, |
| Wasser | 22 %, und |
| 2,4-D in ihrer Säureform | 30 % w/v, |
wobei die Prozentsätze in % w/V, bezogen auf die gesamte Formulierung, ausgedrückt werden.

3. Zusammensetzung nach Anspruch 1, wobei die Zusammensetzung Folgendes umfasst:
| | |
|---|---|
| Dimethylaminopropalamid von gesättigten und ungesättigten Fettsäuren | 42 %, |
| Kokosnuss-Fettamin-Ethoxylat | 8 %, |
| Ethanol | 8 %, |
| Wasser | 28 %, und |
| Dicamba in seiner Säureform | 20 %, |
wobei die Prozentsätze in % w/V, bezogen auf die gesamte Formulierung, ausgedrückt werden.

4. Zusammensetzung nach Anspruch 1, wobei die Zusammensetzung Folgendes umfasst:
| | |
|---|---|
| Dimethylaminopropalamid von gesättigten und ungesättigten Fettsäuren | 45 %, |
| Kokosnuss-Fettamin-Ethoxylat | 9%, |
| Ethanol | 8 %, |
| Wasser | 28 %, und |
| Fomesafen in seiner sauren Form | 12,5 %, |
wobei die Prozentsätze in % w/V, bezogen auf die gesamte Formulierung, ausgedrückt werden.

5. Zusammensetzung nach Anspruch 1, wobei die Zusammensetzung Folgendes umfasst:
| | |
|---|---|
| Dimethylaminopropalamid von gesättigten und ungesättigten Fettsäu ren | 43 %, |
| Kokosnuss-Fettamin-Ethoxylat | 8%, |
| Ethanol | 7%, |
| Wasser | 28 %, und |
| Lactofen in seiner sauren Form | 15 %, |
wobei die Prozentsätze in % w/V, bezogen auf die gesamte Formulierung, ausgedrückt werden.

6. Verfahren zur Herstellung der Zusammensetzung nach einem der vorhergehenden Ansprüche, wobei das Verfahren die folgenden Schritte umfasst:
- Laden der theoretischen Menge des Kokosnuss-Fettamin-Ethoxylats mit 15 Molen Ethylenoxid in den Rührtank,
- Hinzufügen des gesamten gewünschten Ethanols unter Rühren, bis die Homogenität erreicht ist,
- Hinzufügen der Hälfte des gewünschten Wassers unter Rühren, bis die Homogenität erreicht ist,
- Laden, unter Rühren, der gesamten gewünschten Menge an Dimethylaminopropalamid von gesättigten und ungesättigten Fettsäuren und Rühren, bis eine vollständige Auflösung erreicht und eine kristalline Lösung erhalten wird,
- Laden, unter Rühren, der gesamten gewünschten Menge eines Wirkstoffs, ausgewählt aus 2,4-D, Dicamba, Fomesafen oder Lactofen, und Rühren, bis eine vollständige Auflösung erreicht ist und eine kristalline Lösung erhalten wird,
- Hinzufügen des restlichen gewünschten Wassers der Formel unter Rühren, bis die Homogenität und das Endvolumen erreicht sind, und
- Filtrieren der so homogenisierten Lösung.

7. Tankmischung, die eine der Zusammensetzungen nach Anspruch 1 bis 5 einschließt und als komplementäre agrochemische Komponente Glyphosat, Picloram, Atrazin, Sulfentrazon, Cloransulam, Mepiquat, Paraquat, Imazapyr, Imazapic, Imazetapyr oder Gemische davon enthält.

8. Tankmischung nach Anspruch 7, wobei das Gemisch 2,4-D und Glyphosat als aktive Komponenten enthält.

9. Tankmischung nach Anspruch 8, wobei Glyphosat in Form von Kaliumsalz vorliegt.

10. Tankmischung nach Anspruch 7, wobei das Gemisch Dicamba und Glyphosat als aktive Komponenten enthält.

11. Tankmischung nach Anspruch 10, wobei Glyphosat in Form von Kaliumsalz vorliegt.

12. Tankmischung nach Anspruch 7, wobei das Gemisch Fomesafen und Glyphosat als aktive Komponenten enthält.

13. Tankmischung nach Anspruch 12, wobei Glyphosat in Form von Kaliumsalz vorliegt.

14. Tankmischung nach Anspruch 7, wobei das Gemisch Lactofen und Glyphosat als aktive Komponenten enthält.

15. Tankmischung nach Anspruch 14, wobei Glyphosat in Form von Kaliumsalz vorliegt.

## Revendications

1. Composition herbicide sous la forme de microémulsion (ME) étant hautement compatible dans les solutions de pulvérisation, même dans les applications à ultra bas volume, dans laquelle la composition comprend :
| | |
|---|---|
| Diméthylamino propalamide d'acides gras saturés et insaturés | 35 à 45 % p/v |
| Ethoxylate d'amine grasse de noix de coco | 7 à 12 % p/v |
| Ethanol | 6 à 9 % w/v |
| Eau | 20 à 30 % w/v |
| Principe actif | 10 à 40 % p/v |
ledit principe actif étant choisi parmi 2,4-D, Dicamba, Fomesafen et Lactofen.

2. Composition selon la revendication 1, dans laquelle la composition comprend :
| | |
|---|---|
| Diméthylamino propalamide d'acides gras saturés et insaturés | 37 %, |
| Éthoxylate d'amine grasse de noix de coco | 11 %, |
| Éthanol | 7 %, |
| Eau | 22 %, et |
| 2,4-D sous sa forme acide | 30 % p/v, |
les pourcentages étant exprimés en % p/v par rapport à la formulation totale.

3. Composition selon la revendication 1, dans laquelle la composition comprend :
| | |
|---|---|
| Diméthylamino propalamide d'acides gras saturés et insaturés | 42 %, |
| Éthoxylate d'amine grasse de noix de coco | 8%, |
| Éthanol | 8 %, |
| Eau | 28 %, et |
| Dicamba sous sa forme acide | 20 %, |
les pourcentages étant exprimés en % p/v par rapport à la formulation totale.

4. Composition selon la revendication 1, dans laquelle la composition comprend :
| | |
|---|---|
| Diméthylamino propalamide d'acides gras saturés et insaturés | 45 %, |
| Ethoxylate d'amine grasse de noix de coco | 9 %, |
| Éthanol | 8 %, |
| Eau | 28 %, et |
| Fomesafen sous sa forme acide | 12,5 %, |
les pourcentages étant exprimés en % p/v par rapport à la formulation totale.

5. Composition selon la revendication 1, dans laquelle la composition comprend :
| | |
|---|---|
| Diméthylamino propalamide d'acides gras saturés et insaturés | 43%, |
| Ethoxylate d'amine grasse de noix de coco | 8 %, |
| Ethanol | 7 %, |
| Eau | 28 %, et |
| Lactofen sous sa forme acide | 15 %, |
les pourcentages étant exprimés en % p/v par rapport à la formulation totale.

6. Procédé de préparation de la composition selon l'une quelconque des revendications précédentes, dans lequel le procédé comprend les étapes consistant à :
- charger la quantité théorique d'éthoxylate d'amine grasse de noix de coco avec 15 moles d'oxyde d'éthylène dans la cuve d'agitation,
- ajouter sous agitation tout l'éthanol souhaité, jusqu'à ce que l'homogénéité soit atteinte,
- ajouter sous agitation la moitié de l'eau souhaitée, jusqu'à ce que l'homogénéité soit réalisée,
- charger sous agitation la quantité totale souhaitée de diméthylamino propalamide d'acides gras saturés et insaturés, et agiter jusqu'à ce qu'une dissolution complète soit réalisée et qu'une solution cristalline soit obtenue,
- charger sous agitation la quantité totale souhaitée d'un principe actif choisi parmi 2,4-D, Dicamba, Fomesafen ou Lactofen, et agiter jusqu'à ce qu'une dissolution complète soit réalisée et qu'une solution cristalline soit obtenue,
- ajouter sous agitation le reste de l'eau souhaitée dans la formule, jusqu'à atteinte de l'homogénéité et du volume final, et
- filtrer la solution étant ainsi homogénéisée.

7. Mélange en cuve qui comporte l'une quelconque des compositions selon les revendications 1 à 5 et comporte comme composant agrochimique complémentaire du glyphosate, du piclorame, de l'atrazine, de la sulfentrazone, du cloransulam, du mepiquat, du paraquat, de l'imazapyr, de l'imazapic, de l'imazetapyr, ou leurs mélanges.

8. Mélange en cuve selon la revendication 7, dans lequel le mélange comporte du 2,4-D et du glyphosate en tant que composants actifs.

9. Mélange en cuve selon la revendication 8, dans lequel le glyphosate est sous la forme de sel de potassium.

10. Mélange en cuve selon la revendication 7, dans lequel le mélange comporte du Dicamba et du glyphosate en tant que composants actifs.

11. Mélange en cuve selon la revendication 10, dans lequel le glyphosate est sous la forme de sel de potassium.

12. Mélange en cuve selon la revendication 7, dans lequel le mélange comporte du fomésafène et du glyphosate en tant que composants actifs.

13. Mélange en cuve selon la revendication 12, dans lequel le glyphosate est sous la forme de sel de potassium.

14. Mélange en cuve selon la revendication 7, dans lequel le mélange comporte du Lactofen et du glyphosate en tant que composants actifs.

15. Mélange en cuve selon la revendication 14, dans lequel le glyphosate est sous la forme de sel de potassium.
